# EUROPEAN PATENT SPECIFICATION

(11) **EP 4 145 781 B1**
(45) Date of publication and mention of the grant of the patent: **18.03.2026**
(21) Application number: 21796328.9
(22) Date of filing: 25.01.2021
(51) Int. Cl.: H04J 3/07, H04L 12/54

(54) **CELL FLOW CHARACTERISTIC FEATURE ADJUSTMENT METHOD, APPARATUS AND SYSTEM, AND STORAGE MEDIUM**
VERFAHREN, VORRICHTUNG UND SYSTEM ZUR ANPASSUNG VON ZELLFLUSSEIGENSCHAFTEN UND SPEICHERMEDIUM
PROCÉDÉ, APPAREIL ET SYSTÈME D'AJUSTEMENT DE TRAITS CARACTÉRISTIQUES DE FLUX DE CELLULES, ET SUPPORT DE STOCKAGE

(30) Priority: 30.04.2020 CN 202010365322
(43) Date of publication of application: 08.03.2023
(73) Proprietor: ZTE Corporation, Shenzhen, Guangdong 518057 (CN)
(72) Inventor: LIU, Feng, Shenzhen, Guangdong 518057 (CN)
(74) Representative: Canzler & Bergmeier Patentanwälte Partnerschaft mbB
(86) International application number: PCT/CN2021/073630
(87) International publication number: WO 2021/218248

(56) References cited:
- EP-A1- 4 044 470
- CN-A- 101 404 790
- CN-A- 103 069 757
- CN-A- 103 354 528
- CN-A- 112 511 455
- US-A1- 2008 294 966
- US-B1- 6 496 516
- US-B1- 6 657 964
- MAREK HAJDUCZENIA ET AL: "64b/66b line code", IEEE DRAFT; PDFQYRTVJB0VN, IEEE-SA, PISCATAWAY, NJ USA, vol. 802.3.epoc, 7 March 2013 (2013-03-07), pages 1 - 23, XP068058948

## Description

### TECHNICALFIELD

The present disclosure relates to communication networks, and in particular, to a cell flow characteristic value adjustment method, device and system, and storage medium.

### BACKGROUND

When cells are used to deliver customer services in a communication network, the speed of the cell flow is affected by the system operating clock frequency of a device. There may be frequency deviations in the system operating clocks of different devices, resulting in inconsistent cell flow characteristics presented on the different devices. Thus, the stability of the cell flow characteristics cannot be maintained on the network. US 2008/0294966 A1 discloses a data transmission apparatus comprising a packet generation section, a frame encoding section, a transmission section, a reception section, a frame decoding section, and a packet extraction section. The apparatus generates error-correcting-code-added frames, transmits them, performs error detection and correction upon reception, and extracts the original packet by removing the error-correcting code after correction. US 6,496,516 B1 discloses a ring interface coupled to a node in a ring network with multiple nodes, each having a corresponding ring interface. The ring interface includes a ring input port, a ring output port, a bypass queue, a receive queue, an address filter, a transmit queue, and a bypass-transmit queue arbiter. The system buffers, filters, and selectively transmits message packets based on their destination addresses.

### SUMMARY

The present disclosure provides a method, device and systems, and storage medium of adjusting a cell flow characteristic value.

The embodiments of the disclosure are set out in the appended set of claims.

### BRIEF DESCRIPTION OF DRAWINGS

FIG. 1 illustrates a schematic diagram of a process of delivering cells on a network according to an embodiment of the present disclosure.
FIG. 2 illustrates a schematic diagram of a structure of two cell flows converging into one cell flow according to an embodiment of the present disclosure.
FIG. 3 illustrates a schematic diagram of a process of delivering cells in sequence on a network according to an embodiment of the present disclosure.
FIG. 4 illustrates a schematic diagram of a structure of a cell after an idle block is inserted in the cell flow according to an embodiment of the present disclosure.
FIG. 5 is a flowchart illustrating a method for adjusting a characteristic value of the cell flow according to an embodiment of the present disclosure.
FIG. 6a is a schematic diagram illustrating a method for adjusting a characteristic value of the cell flow according to another embodiment of the present disclosure.
FIG. 6b is a schematic diagram illustrating a method for adjusting a parameter value of the cell flow according to another embodiment of the present disclosure.
FIG. 7a is a schematic diagram illustrating a device for performing a principle of the method for adjusting the characteristic value of the cell flow according to an embodiment of the present disclosure.
FIG. 7b is a schematic diagram illustrating a device for performing a principle of the method for adjusting the characteristic value of the cell flow according to another embodiment of the present disclosure.
FIG. 8 is block diagram illustrating a structure of a device for adjusting a characteristic value of a cell flow according to an embodiment of the present disclosure.
FIG. 9 is block diagram illustrating a structure of a device for adjusting a characteristic value of a cell flow according to another embodiment of the present disclosure.
FIG. 10a is block diagram illustrating a structure of a device for adjusting a characteristic value of a cell flow according to a first exemplary embodiment of the present disclosure.
FIG. 10b is block diagram illustrating a structure of a device for adjusting a characteristic value of a cell flow according to a second exemplary embodiment of the present disclosure.
FIG. 11 is block diagram illustrating a structure of a device for adjusting a characteristic value of a cell flow according to a third exemplary embodiment of the present disclosure.
FIG. 12a is block diagram illustrating a structure of a device for adjusting a characteristic value of a cell flow according to a fourth exemplary embodiment of the present disclosure.
FIG. 12b is block diagram illustrating a structure of a device for adjusting a characteristic value of a cell flow according to a fifth exemplary embodiment of the present disclosure.
FIG. 13 is block diagram illustrating exemplary hardware architecture of a computing device capable of implementing the method and device for adjusting the characteristic value of the cell flow according to the embodiments of the present disclosure.

### DETAIL DESCRIPTION OF EMBODIMENTS

In order to make the purpose, technical solutions and advantages of the present disclosure more clearly understood, the embodiments of the present disclosure will be described in detail below in conjunction with the accompanying drawings. It should be noted that the embodiments and the features in the embodiments of the present disclosure can be combined with each other in any way if there is no conflict.

In some embodiments of the present disclosure, the rapid increase in user network information traffic has prompted the rapid development of the delivery bandwidth of communication network information. The interface bandwidth speed of communication equipment has increased from 10M (bits/second) to 100M, and then to 1G and 10G, and has now reached a bandwidth speed of 100G. A large number of 100G optical modules have been commercially available in the market.

In high-bandwidth applications, the network still needs to be compatible with the existing low-rate leased-line services, such as electric power, banks, railroads and other dedicated customer services. The leased-line bandwidth purchased by these customers is much smaller relative to the interface bandwidth of the equipment network port. The bandwidth rate required is relatively stable, but the requirements of service quality for bandwidth services are very high. It is required to ensure that the bandwidth (which is allowed to share to others even if they do not use it) and the physical isolation not to be affected by other customers' services. When both high-bandwidth services and low-bandwidth services exist on the network, strict physical isolation between different services is required so that they are completely unaffected by each other, A commonly adopted scheme is cell delivery.

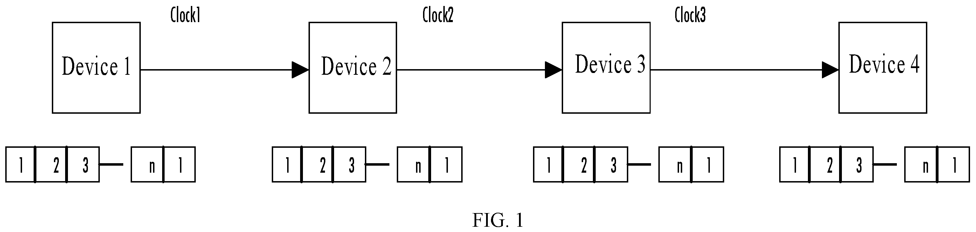

FIG. 1 illustrates a schematic diagram of a process of delivering cells on a network according to an embodiment of the present disclosure. In FIG. 1, four node devices on a communication link on this network are illustrated exemplarily, which are annotated as: device 1, device 2, device 3, and device 4. The data structure delivered on this communication link, as shown in FIG. 1, is a cell flow, each cell carries a cell sequence number, and the sequence numbers of different cells can be used to distinguish the different cells. Thus, the customer services are carried on the different cells.

It should be understood that the number of devices in FIG. 1 is only exemplary. Depending on actual application environment and requirements, the node devices on the communication link can be disposed flexibly.

In FIG. 1, the device 1 sends a series of cells according to a system operating clock frequency of a clock 1, the device 2 sends a series of cells according to a system operating clock frequency of a clock 2, the device 3 sends a series of cells according to a system operating clock frequency of a clock 3, and so on. The actual transmission frequency of the cell flow is different on each device.

Since an individual cell has a small transmission bandwidth and the customer service can be delivered on multiple cells at the same time, the speed of carrying the customer service can become larger by means of the multiple cells. In other words, when the customer service has a small bandwidth, one cell can be selected to carry the delivery, and when the customer service speed is relatively large, the multiple cells can be selected for the delivery. The customer service speed is associated with the number of cells required for carrying, such that the communication link can carry customer services at different speeds, solving the customer services with different bandwidth requirements. Moreover, since the cells are strictly isolated from each other, a strict physical isolation can be achieved between different customer services.

Referring to FIG. 1, since the cell flow starts from the initial node device, the true speed of the cell flow can be determined upon the speed of the initial node device. The maximum frequency deviation of the operating clock frequency of the Ethernet interface of the device is allowed to be within plus or minus 100 PPM (PPM: one millionth of a unit) in accordance with the Ethernet standard. Since the speed of the cell is affected by the system operating clock frequency of the device when it is delivered, there is a frequency deviation problem caused by the system operating clock of different devices, which results in the unstable speed of the cell flow.

Take the device 2 as an example, the device 2 receives the cell flow passed by device 1. The cell flow speed is determined by the operating clock frequency of the device 1, while the device 2 also sends the cell flow to the device 3 in accordance with the operating clock frequency of the device 2. Due to a possible frequency deviation between the clocks of the device 2 and the device 1, the speed of the cell flow received on and the speed of the cell flow sent from the device 2 may not be consistent. When the speed of the received cell flow (speed-in) is greater than the speed of the sent cell flow (speed-out), some of the cells cannot be sent out, causing an accumulation on the device 2 and finally causing a service interruption due to cache overflow. When the speed of the received pixel stream is less than the speed of the sent pixel stream, the sent pixel stream is insufficient on the device 2, causing a break in the sent pixel stream of the device 2 and a discontinuous pixel stream. When the speed of the received cell flow (speed-in) and the speed of the sent cell flow (speed-out) are consistent, a phase position of the cell flow may also be deviated, resulting in a misalignment of the phase position and further causing an additional delay time to the cell flow.

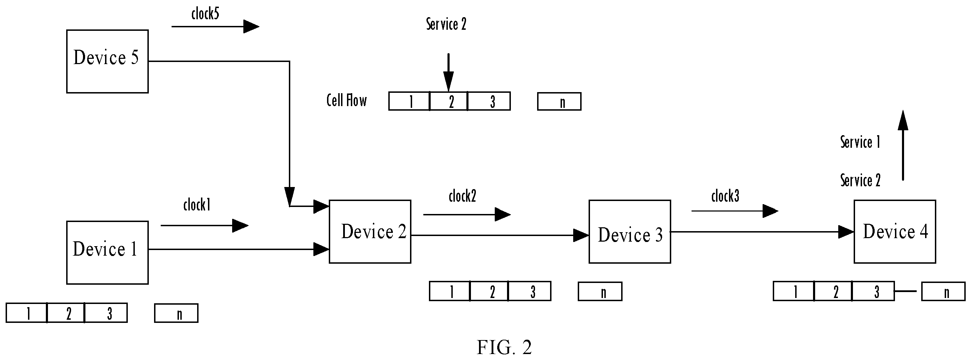

FIG. 2 illustrates a schematic diagram of a structure of two cell flows converging into one cell flow according to an embodiment of the present disclosure. As shown in FIG. 2, in some application scenarios, multiple cell flows accessing a link can converge into the link. For example, accessing cell flows of two directions converge into a cell flow of one converged link.

In FIG. 2, the cells with the same cell sequence number are merged. In the merging, only the cells bearing customer service information are selected for merging while the empty cells are deleted, thus forming one cell flow for delivery. Since there are the cell flows from two or more directions which cannot be converged when the clock frequencies of the cell flows in the directions are inconsistent, the convergence is possible only when the speeds of the cell flows in all directions are adjusted to the same speed.

It can be seen from the above, when there is a difference in the device clock frequency, the speed of the cell flows in different devices is inconsistent, causing difficulties in uploading and downloading the service at different nodes. Especially the two cell flows in different frequencies cannot be converged into a cell flow in the case of inconsistent speed. How to ensure that the speed of the delivered cells remains stable on the network and is not affected by the device clock at each node is a problem to be solved when using the cell to deliver customer services.

Even if the speed of received cell flow is consistent with the speed of sent cell flow, the phase positions of the cell flows may be inconsistent. For example, if an upstream cell phase position on a device is inconsistent with a downstream cell phase position to be sent to on the device, which is called a phase mismatch, the upstream cell will not be sent out immediately but it needs to be cached and is allowed to be sent out only when the phase position matches with the downstream phase position to be sent to. This results in additional delay time for the cell.

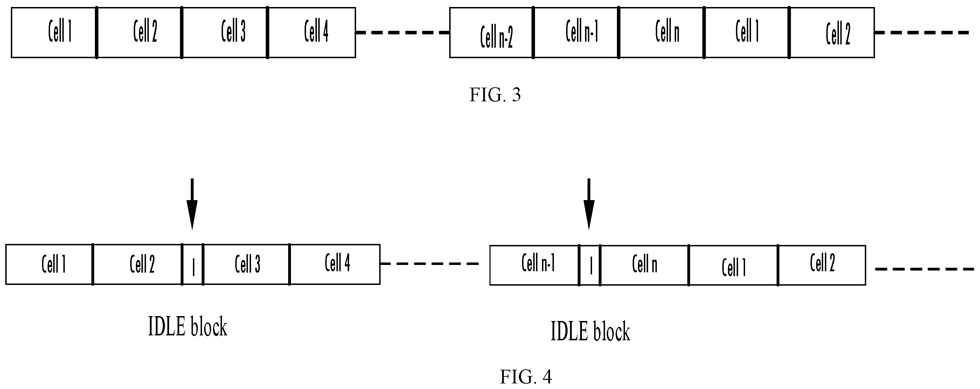

FIG. 3 illustrates a schematic diagram of a process of delivering cells in sequence according to an embodiment of the present disclosure. In the embodiment of the present disclosure, a cell carrying customer service usually is an information segment having a fixed length and a fixed format. As shown in FIG. 3, in a plurality of cells such as cell 1, cell 2, cell 3, cell 4... cell n-2, cell n-1, and cell n, each cell has a fixed length and is delivered in sequence.

In an embodiment, a format of the information segment can be a fixed-length, fixed-format Ethernet message or a fixed-length coded block such as an 8b/10b coded block and a 64/66 coded block. In Ethernet networks, Ethernet messages are encoded into fixed-length encoding blocks such as 8b/10b encoding blocks or 64/66 encoding blocks when they are delivered over the link. The information segment of the fixed-length Ethernet message is encoded and rendered as a fixed-length code block. In a high-speed Ethernet interface, the message may, for example, be converted to a 64/66 encoding block. For ease of description, the following embodiment is illustrated by taking a fixed-length 64/66 encoding block as an example. It should be understood that when Ethernet messages are encoded into 8b/10b blocks or other fixed-length blocks, they are handled in the same manner as fixed-length 64/66 blocks and are not repeated in the embodiment of the disclosure.

With continued reference to FIG. 3, a data message, when subjected to the 64/66 encoding, can encode 64 bits of customer data content into information blocks having a length of 66 bits. The 66-bit-length encoded blocks are divided into two categories, which are a data block (i.e., a DATE block, or D block) and a control block.

Exemplarily, there are various kinds of such control blocks, such as a message start indication block, i.e., S block, for indicating that it is a message start block, a message end indication block, i.e., T block, for indicating that it is a message terminal block, a fault information indication block, i.e., O block, and an idle information block (i.e., IDLE block, or I block).

In an embodiment, an Ethernet message is encoded into a code block stream, starting with an S block, with a D block in the middle, and ending with a T block (i.e., S block + D block + T block). There may be some I blocks and O blocks between two message code blocks. The I block is an idle block, and is filled between messages where there is idle and no data messages.

FIG. 4 illustrates a schematic diagram of a structure of a cell after an idle block is inserted in the cell flow. As shown in FIG. 4, there is an I block inserted between the cell 2 and the cell 3, and an I block inserted between the cell n-1 and the cell n. In some embodiments, there may also be an O block between the messages to convey fault information.

In embodiments of the present disclosure, the IDLE block and the O block, as coded blocks unrelated to customer service, can be used for speed adaptation and phase adaptation, in addition to the insertion into the idle position between messages. Specifically, for example, the ratio of valid service flows decreases when the number of filled IDLE blocks or O blocks increases, which corresponds to a decrease in service speed; conversely, the ration of valid service flows increases when the number of filled IDLE or O blocks decreases, which corresponds to an increase in service speed.

Therefore, the embodiment of the present disclosure provides a method for adjusting the characteristic value of a cell flow, which can adjust the speed of the cell flow by dynamically adjusting the number of IDLE blocks and/or coding blocks such as O blocks that are not related to the customer service within a predetermined period or a predetermined data stream length, so that the speed of the cell flow is independent of a device operating frequency on each device, thereby achieving a constant and stable speed of the cell flow. After the speed of the cell flow is constant and stable, the cell speed can continue to be fine-tuned so that an actual phase position of the cell is consistent with a desired phase position to achieve a state of the same rate and phase and reduce a delay time of the cell.

In the embodiment of the disclosure, when dynamically adjusting the number of code blocks with a predetermined type within the predetermined period or the predetermined data stream length to adjust the speed of the cell flow, the predetermined period and the predetermined data stream length can be customized by a user.

As an example, the predetermined period may be a fixed period. For example, the number of predetermined types of the code blocks in the transmitted cell flow is adjusted every few seconds, minutes, hours or days; the predetermined period can also be a non-fixed period, and a value of the period can be flexibly adjusted according to the application scenario and actual needs.

As an example, the predetermined data stream length can be a fixed data stream length. For example, the number of predetermined types of the code blocks in the cell flow can be adjusted by lengths of information segment or another length value of the data stream, such as one information segment for 16k data blocks, one information segment for 32k data blocks, or one information segment for 64k data blocks; the predetermined data stream length can also be a non-fixed data stream length, and the data stream length can be flexibly adjusted and improved according to the application scenario and actual needs.

It should be understood that in the embodiments of the present disclosure, it is also possible to increase or decrease the number of predetermined types of the code blocks in the cell flow according to other setting methods than predetermined period and setting data, and the specific setting methods can be customized by the user according to the actual application scenario and service needs.

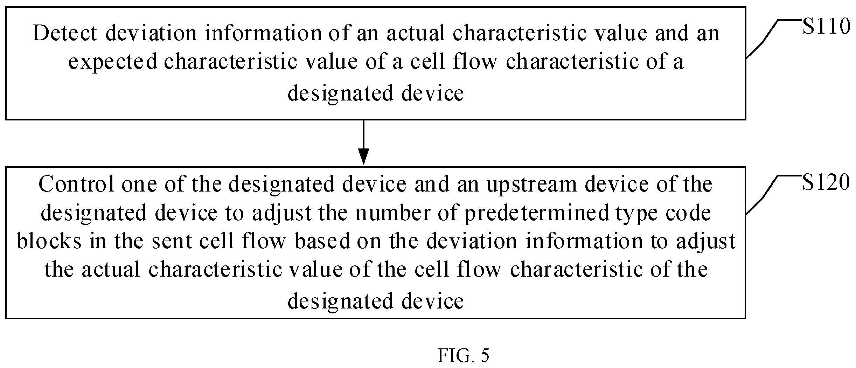

FIG. 5 is a flowchart illustrating a method for adjusting a characteristic value of the cell flow according to an embodiment of the present disclosure. As shown in FIG. 5, the method of adjusting the characteristic value of the cell flow includes the following operations:

S110, detecting deviation information of an actual characteristic value and a desired characteristic value of a cell flow characteristic of a designated device; and

S120, controlling one of the designated device and an upstream device of the designated device to adjust the number of predetermined type code blocks in the sent cell flow based on the deviation information so as to adjust the actual characteristic value of the cell flow characteristic of the designated device.

In the embodiment of the present disclosure, the ratio of the code blocks having the predetermined type and the service stream codes in the sent cell flow can be changed by adjusting the number of predetermined type of the code blocks in the sent cell flow; that is, the adjustment of the number of predetermined type of the code blocks involved in the following description of the embodiment includes adjusting the number of predetermined type of the code blocks in the predetermined period or the code block stream having setting length to change the ratio of the code blocks having the predetermined type and the service stream codes to adjust the actual characteristic value of the cell flow characteristic of the designated device.

In the embodiment of the present disclosure, the detected cell flow characteristic may be a cell velocity or a cell phase, a deviation between the actual characteristic value of the cell flow characteristic and the desired characteristic value is determined, and the actual velocity of the cell flow is adjusted according to the deviation.

In the embodiment of the present disclosure, the upstream device of the designated device may be a node device adjacent to the designated device upstream in the direction of the cell flow delivery; the designated device is a local device that performs the characteristic value detection.

In an embodiment, the predetermined type code block may be a code block unrelated to the customer service carried by the cell flow, including, for example, an idle code block or a designated control code block. Specifically, the control code block may be an O block.

In the embodiment of the present disclosure, the sending speed of the node device is determined by the operating frequency of the local device. By detecting the speed deviation information between the actual speed and the desired speed of the cell flow in the current device, the speed deviation information is fed back to the upstream device of the current device. The upstream device adds or reduces the idle code block or control code block in the sent cell flow without changing the speed of the sent cell flow to adjust the ratio of the idle code block or control code block in the service stream code blocks, thereby changing the actual speed of the cell flow of the node device so that the actual speed of the cell flow is consistent with its desired speed, thereby ensuring that the speed of the transmitted cell flow remains stable on the network and is not affected by each node device at all times.

In an embodiment, when the cell flow characteristic is the cell flow speed, the actual characteristic value of the cell flow characteristic and the desired characteristic value are an actual speed value of the cell flow velocity and a desired speed value. The actual speed value is a speed value determined based on the number of cells in a receiving direction detected by the designated device per unit time; the desired speed value is be an effective transmission speed value of the cell flow of the designated device.

In an embodiment, when the cell flow characteristic is the cell flow phase, the actual characteristic value of the cell flow characteristic and the desired characteristic value are an actual phase position of the cell flow phase and a desired phase position. The actual phase position is a phase position of a cell flow received by the designated device, and the desired phase position is a phase position of a cell flow transmitted by the designated device.

Taking Device 1, Device 2 and Device 3 on the communication link as an example, a desired speed of a cell flow of Device 2 is an effective sending speed of a cell flow of Device 1, and a desired speed of a cell flow of Device 3 is an effective sending speed of the cell flow of Device 2. As can be seen, the desired speed of the cell flow is not a stable and constant value (dependent on the effective sending speed of the cell flow in each device). When adjusting the speed of the cell flow, it is necessary to compare the effective sending speed of the cell flow provided by this device with the actual speed introduced from the upstream device, and adjust one of the speeds so that the two speeds or phases are consistent.

In a specific application, one of the speeds is used as the desired speed and the other one as the actual speed, and then the actual speed is adjusted so that the actual speed and the desired speed are kept consistent.

For example, if the receiving speed from upstream is taken as the actual speed, the sending speed of this device is taken as the desired speed of the previous device. Two types of deviation information, i.e., velocity deviation information and phase position deviation information, are calculated, and then the sending speed of the upstream device is adjusted so that the sending speed of the upstream device (i.e., the receiving speed of this device) is consistent with the sending speed and phase of this device. **In** the specific implementation, it is also possible to use the receiving speed of this device as the desired speed and the sending speed of this device as the actual speed. The sending speed of this device is adjusted so that the sending speed of this device is consistent with the receiving speed (i.e., the sending speed of the upstream device) and the phase of this device.

In the description of the embodiments of the disclosure, in general, the receiving speed of this device is taken as the actual speed and the sending speed of this device as the desired speed for example. However, the adjustment process can be divided into two cases: adjusting the sending speed of the upstream device, or adjusting the sending speed of this device. The two adjustment operation mechanisms are basically the same, with the same magnitude of the adjustment value and the opposite direction of adjustment. For example, adjusting the sending speed of the upstream device upward is equivalent to adjusting the sending speed of this device downward; adjusting the sending speed of the upstream device downward is equivalent to adjusting the sending speed of this device upward.

Therefore, in the method of adjusting the characteristic value of the cell flow according to the embodiment of the present disclosure, if the actual receiving speed of the cell flow of the current device (i.e., the sending speed of the upstream device) is to be adjusted, the deviation information formed by the actual speed of the cell flow of the current device and the desired speed needs to be fed back to the upstream device, and the upstream device adjusts the number of idle blocks or O blocks in the sent cell flow based on this deviation information by taking the sent cell flow as a reference, thereby adjusting the speed of the cell flow received by the current device, so that the actual speed of the current device is adjusted to match the desired speed of the current device; or the speed deviation information formed by the current device according to the actual speed of the cell flow and the desired speed is controlled to adjust the number of idle blocks or O blocks in the cell flow sent by the current device by taking the cell flow sent by the current device as a reference, so that the actual speed of the cell flow of the current device matches the desired speed.

When the speed adjustment is completed, the actual speed value of the cell flow speed of the designated device and the desired speed value are kept consistent. At this time, by detecting the phase position deviation information between the actual phase position of the cell flow of the current device and the desired phase position, the phase position deviation information can be fed back to the upstream device of the current device, thereby adjusting, for example, temporarily fine-tuning, the actual speed of the cell flow to keep the actual phase position of the cell flow consistent with the desired phase position, guaranteeing the phase position of the cell to be consistent, and reducing a caching latency time of the cell flow caused by malposition of the phase position; or the phase position deviation information formed by the current device according to the actual phase position and the desired phase position is controlled to adjust, for example, temporarily fine-tune, the cell flow speed of the current device in the transmitting direction by adjusting the number of idle blocks or O-blocks in the cell flow sent by current device, so that the actual phase position of the cell flow is kept consistent with the desired phase position to ensure that the phase position of the cell of the current device in the receiving direction is consistent with the phase position of the cell in the sending direction.

In an embodiment, when detecting the speed deviation information of the actual speed of the cell flow of the designated device and the desired speed, a speed deviation value and a speed deviation direction can be detected, or only the speed deviation direction can be detected. That is, the speed deviation information of the actual speed of the cell flow of the designated device and the desired speed may include only the speed deviation direction, or may include both the speed deviation value and the speed deviation direction.

In an embodiment, when the cell flow characteristic is a cell flow speed, Step S110 may specifically include: detecting the speed deviation information of the actual speed value and the desired speed value of the cell flow speed of the designated device.

That is, when the cell flow characteristic is the cell flow speed, the speed deviation information includes a speed deviation value and a speed direction, and the above Step S110 may specifically include: S200, determining a speed deviation value of the cell flow using a detected value of a first predetermined detection parameter in the designated device; S300, determining, based on detected value change information of the first predetermined detection parameter in the designated device, the speed deviation direction of the actual speed value and the desired speed value.

In an embodiment, when the cell flow characteristic is a cell flow speed, the speed deviation information includes a speed deviation direction, and the above Step S110 may specifically include the above Step S300, determining, based on the change information of the detected value of the first predetermined detection parameter in the designated device, the speed deviation direction of the actual speed value and the desired speed value.

In an embodiment, Step S200 may specifically include: S11, detecting a speed of the received cell flow and a speed of the sent cell flow in the designated device; S13, taking an absolute value of a speed difference formed by the speed of the received cell flow and the speed of the sent cell flow as the speed deviation value of the cell flow speed.

In another embodiment, S200 may specifically include: S12, determining, within a predetermined time duration, the speed of the received cell flow and the speed of the sent cell flow in the designated device based on a detected value of a sequence number carried by the received cell flow and a detected value of a sequence number carried by the sent cell flow of the designated device at each specified moment; and S13, taking an absolute value of a speed difference formed by the speed of the received cell flow and the speed of the sent cell flow as the speed deviation value of the cell flow speed.

In an embodiment, the above Step S300 may specifically include: S31, detecting the speed of the received cell flow and the speed of the sent cell flow of the designated device; S32, if the speed of the received cell flow is greater than the speed of the sent cell flow, determining the speed deviation direction to be a direction greater than the desired speed; S33, if the speed of the received cell flow is less than the speed of the sent cell flow, determining the speed deviation direction to be a direction less than the desired actual speed.

In this embodiment, the speed deviation value and speed deviation direction of the actual speed and desired speed of the cell flow in the current device can be fed back to the upstream node, and the upstream node adjusts the number of predetermined type code blocks of the sent cell flow within the predetermined period or the predetermined data stream length in accordance with the speed deviation value and speed deviation direction.

In an embodiment, the above step S300 may specifically include: S41, detecting, within a first predetermined duration, a sequence number value carried by the received cell flow and a sequence number value carried by the sent cell flow of the designated device at each specified moment; S42, if a sequence number difference value between the sequence number value carried by the received cell flow and the sequence number value carried by the sent cell flow increases within the first predetermined duration, then determining the speed deviation direction to be the direction greater than the desired speed; S43, if the sequence number difference value decreases within the first predetermined duration, determining the speed deviation direction to be the direction less than the desired speed.

In this embodiment, the sequence number difference is obtained by subtracting the sequence number in the sending cell direction from the sequence number in the receiving cell direction at each fixed moment. If the sequence number difference is increasing, it means that the speed in the receiving direction is greater than that in the sending direction, and the faster the difference increases, the greater the frequency deviation; conversely, if the sequence number difference is decreasing, it means that the speed in the receiving direction is less than that in the sending direction, and the faster the difference decreases, the greater the frequency deviation. When the sequence number difference between the receiving direction and the sending direction at each same moment remains unchanged and no longer increases or decreases, it means that the speeds in the receiving direction and the sending direction are identical and match each other.

In an embodiment, the above step S300 may specifically include: S51, detecting a storage capacity of a cell cache of the designated device at each specified moment during a second predetermined duration; S52, if the storage capacity increases during the second predetermined duration, determining the speed deviation direction to be the direction greater than the desired speed; S53, if the storage capacity decreases during the second predetermined duration, determining the speed deviation direction to be the direction less than the desired actual speed.

In this embodiment, the storage capacity of the cell cache refers to a cache depth. When the cache depth is increasing, it means that the speed of the receiving cell is greater than the speed of the sending cell, and the faster the depth increases, the greater the frequency deviation; when the cache depth is decreasing, it means that the speed of the receiving cell is less than the speed of the sending cell, and the faster the depth decreases, the greater the frequency deviation.

In this embodiment of the disclosure, when detecting the speed deviation information caused by the clock frequency deviation, only the speed deviation direction caused by the clock frequency deviation can be detected without detecting the specific amplitude of the speed deviation caused by the frequency deviation. When the direction of the frequency deviation is detected, the adjustment can be slowly made in the correct direction until gradually to the ideal frequency amplitude.

In an embodiment, when the cell flow characteristic is a cell flow phase, step S110 may specifically include: detecting phase position deviation information of the actual phase position and the desired phase position of the cell flow phase of the designated device.

In other words, when the phase position deviation information is a phase position deviation direction and a phase position deviation value; the above step S110 may specifically include: S400, calculating the phase position deviation value between the actual phase position and the desired phase position based on the difference between a detected parameter value in the receiving direction and a detected parameter value in the sending direction of a second predetermined detection parameter of a designated device; S500, determining the phase position deviation direction of the actual phase position and the desired phase position based on a relative relationship between the detected parameter value in the receiving direction and the detected parameter value in the sending direction of the second predetermined detection parameter of the designated device.

In an embodiment, when the phase position deviation information includes a phase position deviation direction; the above step S110 may specifically comprise: the above step S500, determining the phase position deviation direction of the actual phase position and the desired phase position based on the relative relationship between the detected parameter value in the receiving direction and the detected parameter value in the sending direction of the second predetermined detection parameter of the designated device.

In an embodiment, step S400 may specifically include: S61, detecting the phase position of the received cell flow and the phase position of the sent cell flow in the designated device; and S63, taking an absolute value of the position difference between the phase position of the received cell flow and the phase position of the sent cell flow as the phase position deviation value between the actual phase position and the desired phase position.

In another embodiment, step S400 may specifically include: S62, determining the phase position of the received cell flow and the phase position of the sent cell flow in the designated device based on the detected sequence number value carried by the received cell flow and the detected sequence number value carried by the sent cell flow in the designated device; and S63, taking the absolute value of the position difference between the phase position of the received cell flow and the phase position of the sent cell flow as the phase position deviation value between the actual phase position and the desired phase position.

In an embodiment, step S500 may specifically include: if the phase position of the received cell flow in the designated device is detected to be ahead of the phase position of the sent cell flow, determining the phase position deviation direction to be the direction greater than the desired phase position; and if the phase position of the received cell flow of the designated device is detected to be lagging behind the phase position of the sent cell flow, determining the phase position deviation direction to be the direction less than the desired phase position.

In this embodiment, when the cell flow characteristic is phase information, the phase position of the received cell flow and the phase position of the sent cell flow in the designated device are detected; when the phase position of the received cell flow is ahead of the phase position of the sent cell flow, the phase position deviation direction is determined to be the direction greater than the desired phase position; when the phase position of the received cell flow lags behind the phase position of the sent cell flow, the phase position deviation direction is determined to be the direction less than the desired actual phase position.

In another embodiment, step S500 may specifically include: if the sequence number value carried by the received cell flow in the designated device is detected to be greater than the sequence number value carried by the sent cell flow at the same moment, then determining the phase position deviation direction to be the direction greater than the desired phase position; and if the sequence number value carried by the received cell flow in the designated device is detected to be less than the sequence number value carried by the sent cell flow, then determining the phase position deviation direction to be the direction less than the desired phase position.

In this embodiment, when the cell flow characteristic is phase information, the sequence number value carried by the received cell flow in the designated device and the sequence number value carried by the sent cell flow are detected at each specified moment within a first predetermined time duration; if the sequence number value carried by the received cell flow is greater than the sequence number value carried by the sent cell flow, the phase position deviation direction is determined to be the direction greater than the desired phase position; if the sequence number value carried by the received cell flow is less than the sequence number value carried by the sent cell flow, the phase position deviation direction is determined to be the direction less than the desired phase position.

In an embodiment, when the cell flow characteristic is a cell flow speed, the deviation information of the actual speed value and the desired speed value of the cell flow speed includes: the speed deviation value and the speed deviation direction; the above step S120 may specifically include: S71, determining a first adjustment quantity and a first adjustment direction of the predetermined type code block according to the speed deviation value and the speed deviation direction; S72, controlling an upstream device of the designated device to adjust, in accordance with the first adjustment direction and the first adjustment quantity, the number of predetermined type code blocks of the cell flow within the predetermined period or the predetermined data stream length; or S73, controlling the designated device to adjust, in accordance with an opposite direction of the first adjustment direction and the first adjustment quantity, the number of predetermined type code blocks of the cell flow within the predetermined period or the predetermined data stream length.

In an embodiment, when the cell flow characteristic is by a cell flow speed, the deviation information of the actual speed value and the desired speed value of the cell flow speed includes: the speed deviation direction; the above step S120 may specifically include: S74, determining a second adjustment direction of the predetermined type code block according to the speed deviation direction; S75, controlling an upstream device of the designated device to adjust, in accordance with the second adjustment direction, the number of predetermined type code blocks of the sent cell flow within the predetermined period or the predetermined data stream length using a specified number of predetermined type blocks; or S76, controlling the designated device to adjust, in accordance with an opposite direction of the second adjustment direction, the number of predetermined type code blocks of the cell flow within the predetermined period or the predetermined data stream length using a specified number of predetermined type code blocks.

In an embodiment, when the cell flow characteristic is a cell flow speed, the method, after adjusting the number of predetermined type code blocks of the cell flow within the predetermined period or the predetermined data stream length, may further include: S77, selecting the cell flow phase as the cell flow characteristic when the actual speed value and the desired speed value of the cell flow speed of the designated device are detected to be consistent; S78, controlling one of the designated device or the upstream device of the designated device to adjust, based on the phase position deviation information, the number of predetermined type code blocks in the sent cell flow to adjust the actual phase position of the cell flow characteristic in the designated device.

In an embodiment, when the cell flow characteristic is a cell flow phase, the phase position deviation information of the actual phase position of the cell flow phase and the desired phase position includes a phase position deviation value and a phase position deviation direction; step S120 may specifically include: S81, selecting the cell flow speed as the cell flow characteristic, detecting the speed deviation information of the actual speed value and the desired speed value of the cell flow speed in the designated device, and controlling one of the designated device and the upstream device of the designated device to adjust, according to the speed deviation information, the number of predetermined type code blocks of the sent cell flow within the predetermined period or the predetermined data stream length; S82, when the actual speed value and the desired speed value of the cell flow speed in the designated device are consistent, selecting the cell flow phase as the cell flow characteristic; S83, detecting the phase position deviation information of the actual phase position and the desired phase position of the cell flow phase in the designated device; and S84, controlling one of the designated device and the upstream device of the designated device to adjust, according to the phase position deviation information, the number of predetermined type code blocks of the sent cell flow.

In an embodiment, when the cell flow characteristic is a cell flow phase, the phase position deviation information of the actual phase position and the desired phase position of the cell flow phase includes the phase position deviation direction; step S84 may specifically include the following steps.

S8401, determining, based on the phase position deviation value and the phase position deviation direction, a third adjustment quantity and a third adjustment direction of the predetermined type code blocks in the cell flow; S8402, recording the number of the predetermined type code blocks in the cell flow of the upstream device of the designated device as a first original code block number, and controlling the upstream device to adjust, in accordance with the third adjustment direction and the third adjustment quantity, the number of the predetermined type code blocks in the cell flow; S8403, when the actual phase position and the desired phase position in the designated device are consistent, restoring the number of predetermined type code blocks of the cell flow in the upstream device into the first original code block number.

In an embodiment, when the cell flow characteristic is a cell flow phase, the phase position deviation information includes a phase position deviation direction; step S84 may specifically include the following steps.

S8404, when the actual speed value and the desired speed value of the cell flow speed in the designated device are consistent, determining a fourth adjustment direction of the predetermined type code block in the cell flow according to the phase position deviation direction; S8405, recording the number of predetermined type code blocks in the cell flow of the designated device as a second original code block number, and controlling the designated device to adjust, according to the fourth adjustment direction, the number of predetermined type code blocks of the sent cell flow using a specified number of predetermined type code blocks; S8406, when the actual phase position in the designated device is consistent with the desired phase position, restoring the number of predetermined type code blocks of the cell flow in the designated device into the second original code block number.

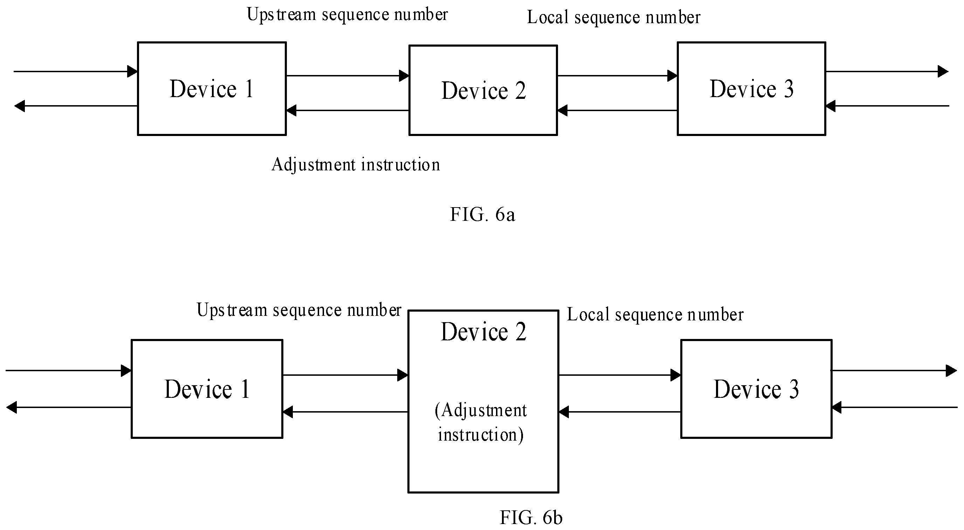

The process of adjusting the cell flow parameter value according to an embodiment of the present disclosure will be described in detail below in conjunction with FIG. 6a and FIG. 6b. FIG. 6a is a schematic diagram illustrating a method for adjusting a parameter value of a cell flow according to an exemplary embodiment of the present disclosure. As shown in FIG. 6a, among device 1, device 2, and device 3 on a communication link, device 3 is a downstream device of device 2 and device 1 is an upstream device of device 2.

In this embodiment, the characteristic value of the received cell flow and the characteristic value of the sent cell flow of device 2 are detected, characteristic value difference information of the received cell flow and the sent cell flow is calculated, and a difference direction and a difference size in the characteristic value difference information are provided to the upstream node device 1.

Referring to Fig. 6a, when the cell flow characteristic is a cell flow speed, the speed deviation information of the cell flow in a receiving direction and the cell flow in a sending direction can be obtained by detecting the difference size and a change direction of the difference size of the sequence number value of the received cell flow (upstream sequence number) and the sequence number value of the sent cell flow (local sequence number) in device 2. Based on this speed deviation information, an adjustment instruction is generated, which is an instruction to adjust the speed of the cell flow in device 1, including the adjustment direction and the adjustment quantity for a predetermined type code block, or including only the adjustment direction for the predetermined type code block.

Referring to FIG. 6a, when the cell flow characteristic is cell flow phase position information, the phase position deviation information of the cell flow in the receiving direction and the cell flow in the sending direction can be obtained by detecting the difference size and a positive or negative sign of the difference of the sequence number value of the received cell flow (upstream sequence number) and the sequence number value of the sent cell flow (local sequence number) in device 2 at the same moment. An adjustment instruction is generated based on the phase position deviation information. In this case, the adjustment instruction is an instruction to adjust the phase of the cell flow in device 1, including the adjustment direction and the adjustment quantity for a predetermined type code block, or including only the adjustment direction for the predetermined type code block.

FIG. 6b is a schematic diagram illustrating a method for adjusting a parameter value of a cell flow according to another exemplary embodiment of the present disclosure. As shown in FIG. 6b, among device 1, device 2, and device 3 on a communication link, device 3 is a downstream device of device 2 and device 1 is an upstream device of device 2.

Referring to Figure 6b, when the cell flow characteristic is a cell flow speed, the speed deviation information of the cell flow in the receiving direction and the cell flow in the sending direction can be obtained by detecting the difference size and the change direction of the difference size of the sequence number value of the received cell flow (upstream sequence number) and the sequence number value of the sent cell flow (local sequence number) in device 2. The speed adjustment information is calculated based on the speed deviation information, and an adjustment instruction is generated, which is an instruction to adjust the speed of the cell flow in device 2, including the adjustment direction and the adjustment quantity for a predetermined type code block, or including only the adjustment direction for the predetermined type code block.

Referring to FIG. 6b, when the cell flow characteristic is cell flow phase position information, the phase position deviation information of the cell flow in the receiving direction and the cell flow in the sending direction can be obtained by detecting the difference size and a positive or negative sign of the difference of the sequence number value of the received cell flow (upstream sequence number) and the sequence number value of the sent cell flow (local sequence number) in device 2. An adjustment instruction is generated, which is an instruction to adjust the phase position of the cell flow in device 2, including the adjustment direction and the adjustment quantity for a predetermined type code block, or including only the adjustment direction for the predetermined type code block.

In the embodiment of the disclosure, when the cell flow characteristic is a cell flow speed, the device 1 is controlled to adjust, according to the received adjustment instruction, the number of predetermined type code blocks of the sent cell flow within the predetermined period or the predetermined data stream length to adjust the effective speed of device 1 sending the cell flow, so that the speed of the received cell flow and the speed of the sent cell flow in device 2 are consistent, thereby achieving that the constant and stable speed of the cell flow without being affected by the operating frequency of the device. Moreover, after the speed adjustment of the cell flow, the cell flow characteristic is selected as the cell flow phase position, and minor adjustments continue to be made to the number of predetermined type code blocks in the sent cell flow, so that the phase position of the received cell flow and the phase position of the sent cell flow in device 2 remain consistent.

In the above adjustment process, when the cell flow characteristic is the cell flow speed, if the number of predetermined type code blocks in the cell flow of the adjusted device 2 in the predetermined period or the predetermined length service stream is changed according to the adjustment value to adjust a proportion of the predetermined type code blocks in the service stream blocks, then the work will continue according to the adjusted state; when the cell flow characteristic is the cell flow phase, if the number of predetermined type code blocks in the cell flow of the adjusted device 2 is changed according to the adjustment value, the state before the adjustment will be restored after the adjustment and the work will continue according to the state before the adjustment.

In an embodiment, when the characteristic value is phase position information, if the actual phase position is ahead of the direction of the desired phase position, the adjustment direction in the speed adjustment instruction sent to the device 1 will be the direction of reducing the actual speed, and the adjustment of the number of predetermined type code blocks in the sent cell flow will include increasing the number of predetermined type code blocks; if the actual phase position lags behind the direction of the desired phase position, the adjustment direction in the speed adjustment instruction sent to the device 1 will be the direction of increasing the actual speed, and the adjustment of the number of predetermined type code blocks in the sent cell flow will include decreasing the number of predetermined type code blocks.

In this embodiment, the adjustment direction (whether to increase the number of predetermined type code blocks or to decrease the number of predetermined type code blocks) of the predetermined type code blocks in the upstream node can be determined based on the deviation direction of the characteristic value.

In this embodiment, the upstream device adjusts a set number of predetermined type code blocks at a time in accordance with the characteristic value adjustment direction, such as adjusting only 1 IDLE block at a time, or a specified number of IDLE blocks. It should be understood that the number of each adjustment can be defined and adjusted according to the actual needs, and is not restricted by the embodiment of the present disclosure does. When the actual characteristic value of the designated device still does not meet the desired characteristic value requirement after adjustment, the characteristic value deviation information will continue to be detected. In this case, the designated device continues to provide the upstream device with the corresponding adjustment direction based on the characteristic value deviation information, and the upstream device makes adjustments in accordance with the corresponding adjustment direction until the actual characteristic value of the designated device is consistent with the desired characteristic value requirement.

In the characteristic value adjustment method according to the embodiment of the present disclosure, for a plurality of node devices in the communication link, whenever deviation information between the actual characteristic value of the cell flow characteristic of a node device and the desired characteristic value is detected at any time, the deviation information of the characteristic value of the node device can be sent to the corresponding upstream device, and the corresponding upstream device can adjust, based on the received deviation information of the characteristic value, the number of predetermined type code blocks in the sent cell flow, and thus adjust the actual characteristic value of the cell flow.

In the embodiment of the disclosure, the selected characteristic value can be either the speed information or the phase position information, or the speed information is selected first, and then after the speeds are adjusted to be consistent, the phase position information is selected as the characteristic value to adjust the phase position to be consistent.

For multiple node devices in the communication link, such as device 1, device 2, device 3, ......, device n-1, and device n. At any moment, device 1 can adjust the idle block in the sent cell flow based on the received characteristic value deviation information of device 2; device 2 can adjust the idle block in the sent cell flow based on the received characteristic value deviation information of device 3 ......; and so on, device n-1 may adjust the idle block in the sent cell flow based on the received deviation information of the characteristic value of device n.

Among the above multiple node devices, device 1 is the starting node device on the link (i.e., when no upstream node device exists for device 1), and the actual speed of the cell flow in device 1 can be a speed of the cell flow determined by the system operating clock frequency of device 1; device n is the terminating node device on the link (i.e., when no downstream node device exists for device n), and the desired speed of the cell flow in device n can be a speed of the cell flow determined by the system operating clock frequency of device n.

Since each device can individually adjust the number of idle blocks in the cell flow based on the deviation information of the characteristic value (speed or phase position) fed back from the downstream devices, in practice, the desired speed of the cell flow of each device can be a transiently changing value, i.e., the adjustment of the characteristic value of the cell flow is a dynamic adjustment process. Each node device continuously adjusts the number of predetermined type code blocks in the sent cell flow based on the speed deviation information from downstream devices in this dynamic adjustment process, until the actual characteristic value of the cell flow of each device and the desired characteristic value are consistent and the speed of the cell flow transmitted over the whole link remains stable on the network.

In practical application, in addition to adjusting the effective sending speed of the cell flow by adjusting the number of IDLE blocks, the speed of the cell flow can also be adjusted by adjusting the number of O blocks. Moreover, in the embodiment of the disclosure, when it is necessary to adjust the speed of the cell flow by reducing the number of IDLE blocks or reducing the number of O blocks, there are enough predetermined type code blocks in the cell flow for the adjustment of the speed of the cell flow.

The idle block serving as the predetermined type code block is taken as an example. In some embodiments, when the cell flow characteristic is the cell flow speed, the downstream node device achieves adaptation between a receiving direction of the downstream node device and desired cell flow speed by controlling the effective cell flow speed of the upstream node device, and in particular by controlling the number of idle information blocks inserted in the cell flow by the upstream device; when the characteristic value is the phase position, the downstream node device can achieve the adaptation between the receiving direction of the downstream node device and the desired phase position of the cell flow by controlling the effective phase position of the cell flow of the upstream node device, and in particular by controlling the number of idle information blocks inserted in the sent cell flow by the upstream device.

In some other embodiments, when the characteristic value is the cell flow speed, the adaptation between the actual speed value and the desired speed value of the cell flow characteristic can be achieved in the designated device by controlling the number of idle information blocks inserted in the sent cell flow by the designated device; when the characteristic value is the phase position, the adaptation between the received direction and the desired phase position of the cell flow can be achieved in the designated device by controlling the number of idle information blocks inserted in the sent cell flow by the designated device, and in particular by controlling the number of idle information blocks inserted in the sent cell flow by this designated device.

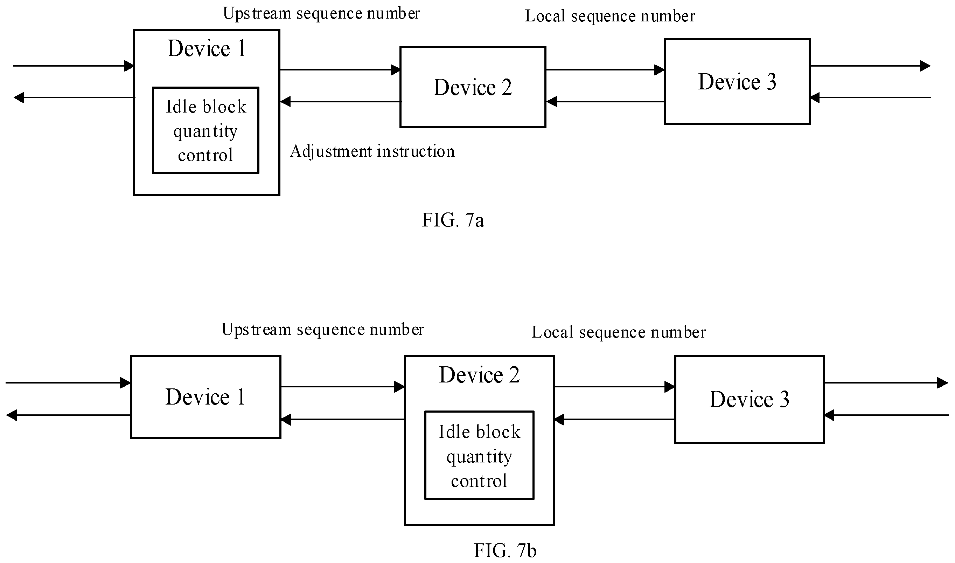

FIG. 7a is a schematic diagram illustrating a device for performing a principle of the method for adjusting the characteristic value of the cell flow according to an embodiment of the present disclosure. FIG. 7b is a schematic diagram illustrating a device for performing a principle of the method for adjusting the characteristic value of the cell flow according to another embodiment of the present disclosure. Since there are a small number of idle information blocks between the cells, the effective sending speed of the cell flow can be controlled by adjusting the number of these idle information blocks.

In Fig. 7a, device 1 is an upstream device of device 2, and device 2 is an upstream device of device 3. When device 1 receives an adjustment command from device 2, device 1 adjusts the actual characteristic value of the cell flow of device 2 by adjusting the number of idle blocks in the sent cell flow to meet the reception demand of device 2.

In FIG. 7b, device 1 is an upstream device of device 2, and device 2 is an upstream device of device 3. Device 2 adjusts the number of idle blocks in the sent cell flow according to the generated adjustment instruction in this device to meet the speed adaptation or phase position adaptation between the actual characteristic value and the desired characteristic value of device 2.

According to the method of adjusting the characteristic value of the cell flow in the embodiment of the present disclosure, the designated node device can achieve the speed adaptation or phase position adaptation between the received direction of the designated node device and the desired cell flow speed by controlling the speed of the cell flow sent by the upstream node device, or by controlling the speed of the cell flow sent by the designated device. With the above method of adjusting the characteristic value of the cell flow, starting from the designated device, each node device is adjusted upstream one by one until the cell flow transmitted over the whole link maintains the stability and adaptation of characteristics on the network, effectively solving the problem that the speed and phase of cell transmission are affected by the operating frequency and phase of each node system.

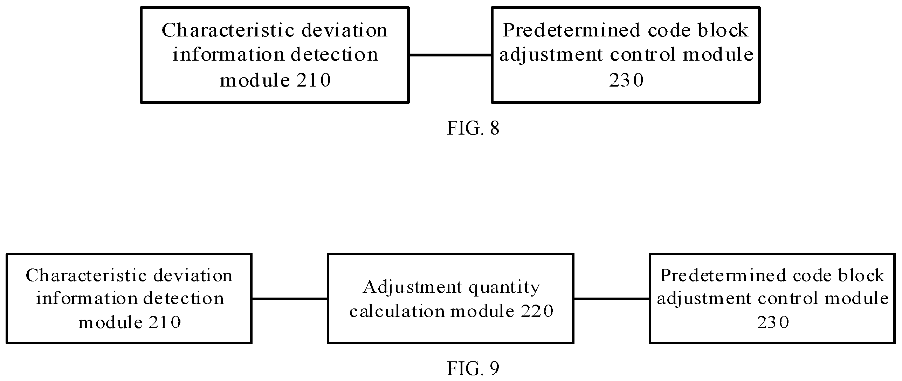

FIG. 8 is block diagram illustrating a structure of a device for adjusting a characteristic value of a cell flow according to an embodiment of the present disclosure. As shown in FIG. 8, in an embodiment, the cell flow characteristic value adjustment device may specifically include the following modules.

A characteristic deviation information detection module 210 is configured to detect deviation information of an actual characteristic value and a desired characteristic value of a cell flow characteristic of a designated device.

A predetermined code block adjustment control module 230 is configured to control one of the designated device and an upstream device of the designated device to adjust the number of predetermined type code blocks in the sent cell flow based on the deviation information to adjust the actual characteristic value of the cell flow characteristic of the designated device.

In an embodiment, the characteristic deviation information detection module 210 may specifically include: a speed deviation information detection unit, configured to detect the speed deviation information of the actual speed value and the desired speed value of the cell flow speed of the designated device when the cell flow characteristic is a cell flow speed; and a phase position deviation information detection unit, configured to detect phase position deviation information of the actual phase position and the desired phase position of the cell flow phase of the designated device when the cell flow characteristic is a cell flow phase.

In an embodiment, the actual speed value is a speed value determined based on the number of cells in a receiving direction detected by the designated device per unit time, and the desired speed value is an effective transmission speed value of the cell flow of the designated device; the actual phase position is a phase position of a cell flow received by the designated device, and the desired phase position is a phase position of the sent cell flow of the designated device.

In an embodiment, when the cell flow is characterized is a cell flow speed, the speed deviation information includes a speed deviation direction, and the speed deviation information detection unit can be specifically configured to determine a speed deviation direction of the actual speed value and the desired speed value based on detected value change information of a first predetermined detection parameter in the designated device.

In an embodiment, the speed deviation information detection unit can be specifically configured to: detect the speed of the received cell flow and the speed of the sent cell flow of the designated device; if the speed of the received cell flow is greater than the speed of the sent cell flow, determine the speed deviation direction to be a direction greater than the desired speed; and if the speed of the received cell flow is less than the speed of the sent cell flow, determine the speed deviation direction to be a direction less than the desired actual speed.

In an embodiment, the speed deviation information detection unit can be specifically configured to: detect, within a first predetermined duration, a sequence number value carried by the received cell flow of the designated device at each specified moment and a sequence number value carried by the sent cell flow; if a sequence number difference value between the sequence number value carried by the received cell flow and the sequence number value carried by the sent cell flow increases within the first predetermined duration, determine the speed deviation direction to be the direction greater than the desired speed; if the sequence number difference value decreases within the first predetermined duration, determine the speed deviation direction to be the direction less than the desired speed.

In an embodiment, the speed deviation information detection unit can be specifically configured to: detect, during a second predetermined duration, a storage capacity of a cell cache of the designated device at each specified moment; if the storage capacity increases during the second predetermined duration, determine the speed deviation direction to be the direction greater than the desired speed; if the storage capacity decreases during the second predetermined duration, determine the speed deviation direction to be the direction less than the desired actual speed.
In an embodiment, when the cell flow characteristic is the cell flow speed, the speed deviation information includes the speed deviation value and the speed deviation direction, and the speed deviation information detection unit can be specifically configured to: determine a speed deviation value of the cell flow using a detected value of a first predetermined detection parameter in the designated device; and determine, based on detected value change information of the first predetermined detection parameter in the designated device, the speed deviation direction of the actual speed value and the desired speed value.

In an embodiment, the speed deviation information detection unit, when configured to determine the speed deviation value of the cell flow using the detected value of the first predetermined detection parameter in the designated device, can be specifically configured to: detect a speed of the received cell flow and a speed of the sent cell flow in the designated device; or determine, at a predetermined time duration, the speed of the received cell flow and the speed of the sent cell flow in the designated device based on a detected value of a sequence number carried by the received cell flow and a detected value of a sequence number carried by the sent cell flow of the designated device at each specified moment; and take an absolute value of a speed difference formed by the speed of the received cell flow and the speed of the sent cell flow as the speed deviation value of the cell flow speed.

In an embodiment, when the cell flow characteristic is a cell flow phase, the phase position deviation information includes a phase position deviation direction; then the phase deviation information detection unit can be specifically configured to: determine the phase position deviation direction of the actual phase position and the desired phase position based on a relative relationship between the detected parameter value of the second predetermined detection parameter of the designated device in the receiving direction and the parameter value in the sending direction.

In an embodiment, the phase deviation information detection unit can be specifically configured to: if the phase position of the received cell flow in the designated device is detected to be ahead of the phase position of the sent cell flow, determine the phase position deviation direction to be the direction greater than the desired phase position; and, if the phase position of the received cell flow of the designated device is detected to be lagging behind the phase position of the sent cell flow, determine the phase position deviation direction to be the direction less than the desired phase position.

In an embodiment, the phase deviation information detection unit can be specifically configured to: if the sequence number value carried by the received cell flow in the designated device is detected to be greater than the sequence number value carried by the sent cell flow at the same time, determine the phase position deviation direction to be the direction greater than the desired phase position; and if the sequence number value carried by the received cell flow in the designated device is detected to be less than the sequence number value carried by the sent cell flow, determine the phase position deviation direction to be the direction less than the desired phase position.

In an embodiment, the phase position deviation information includes a phase position deviation direction and a phase position deviation value; the phase deviation information detection unit can include: a phase deviation value determination subunit configured to calculate the phase position deviation value between the actual phase position and the desired phase position based on the difference between a detected parameter value of a second predetermined detection parameter of a designated device in the receiving direction and a detected parameter value in the sending direction; and a phase deviation direction determination subunit configured to determine the phase position deviation direction of the actual phase position and the desired phase position based on a relative relationship between the detected parameter value of the second predetermined detection parameter of the designated device in the receiving direction and the detected parameter value in the sending direction.

In an embodiment, the phase deviation value determination subunit can be specifically configured to: detect the phase position of the received cell flow of the designated device and the phase position of the sent cell flow; or determine the phase position of the received cell flow of the designated device and the phase position of the sent cell flow based on the detected sequence number value carried by the received cell flow of the designated device and the detected sequence number value carried by the sent cell flow; and take an absolute value of the position difference between the phase position of the received cell flow and the phase position of the sent cell flow as the phase position deviation value of the actual phase position and the desired phase position.

FIG. 9 is block diagram illustrating a structure of a device for adjusting a characteristic value of a cell flow according to another embodiment of the present disclosure. The same reference numerals are annotated for the same or equivalent structure in FIGS. 8 and 9. The cell flow characteristic value adjustment device as shown in FIG. 9 is substantially the same as the cell flow characteristic value adjustment device in FIG. 8, except that the cell flow characteristic value adjustment device shown in FIG. 9 also includes an adjustment quantity calculation module 220.

In an embodiment, the deviation information includes a speed deviation value and a speed deviation direction; the adjustment quantity calculation module 220 can be configured to determine a first adjustment quantity and a first adjustment direction of the predetermined type code block according to the speed deviation value and the speed deviation direction; the predetermined code block adjustment control module 230 can be specifically configured to control an upstream device of the designated device to adjust, in accordance with the first adjustment direction and the first adjustment quantity, the number of predetermined type code block of the cell flow within the predetermined period or the predetermined data stream length; or control the designated device to adjust, in accordance with an opposite direction of the first adjustment direction and the first adjustment quantity, the number of predetermined type code block of the cell flow within the predetermined period or the predetermined data stream length.

In an embodiment, the deviation information includes a speed deviation direction; the predetermined block adjustment control module 230 can be configured to: determine a second adjustment direction of the predetermined type block according to the speed deviation direction; control an upstream device of the designated device to adjust, in accordance with the second adjustment direction, the number of predetermined type of blocks of the sent cell flow within the predetermined period or the predetermined data stream length using a specified number of predetermined type of blocks; or control the designated device to adjust, in accordance with an opposite direction of the second adjustment direction, the number of predetermined type blocks of the cell flow within the predetermined period or the predetermined data stream length using a specified number of predetermined type code blocks.

In an embodiment, the cell flow characteristic is a cell flow speed, and the characteristic deviation information detection module 310 is further configured to, after adjusting the number of predetermined type code blocks of the cell flow within the predetermined period or the predetermined data stream length, select the cell flow phase as the cell flow characteristic when the actual speed value of the cell flow speed of the designated device and the desired speed value are detected to be consistent; the characteristic deviation information detection module 310 is further configured to detect the phase position deviation information of the actual phase position and the desired phase position of the cell flow phase of the designated device; the predetermined code block adjustment control module 230 controls one of the designated device or the upstream device of the designated device to adjust, based on the phase position deviation information, the number of predetermined type code blocks in the sent cell flow to adjust the actual phase position of the cell flow characteristic in the designated device.

In an embodiment, when the cell flow characteristic is a cell flow phase, the characteristic deviation information detection module 310 is further configured to select the cell flow speed as the cell flow characteristic, and to detect the speed deviation information of the actual speed value and the desired speed value of the cell flow speed of the designated device; the predetermined code block adjustment control module 230 is configured to control one of the designated device and the upstream device of the designated device to adjust, according to the speed deviation information, the number of predetermined type code blocks of the sent cell flow within the predetermined period or the predetermined data stream length; the characteristic deviation information detection module 310 is further configured to select the cell flow phase as the cell flow characteristic when the actual speed value of the cell flow speed in the designated device and the desired speed value are consistent, and to detect the phase position deviation information of the actual phase position and the desired phase position of the cell flow phase in the designated device; the predetermined code block adjustment control module 230 is further configured to control one of the designated device and the upstream device of the designated device to adjust, according to the phase position deviation information, the number of predetermined type code blocks of the sent cell flow.

In an embodiment, the phase position deviation information includes a phase position deviation value and a phase position deviation direction; the adjustment quantity calculation module 220 can be specifically configured to determine, based on the phase position deviation value and the phase position deviation direction, a third adjustment quantity and a third adjustment direction of the predetermined type code blocks in the cell flow; the predetermined code block adjustment control module 230 can be specifically configured to: record the number of the predetermined type code blocks in the cell flow of the upstream device of the designated device as a first original code block number, and to control the upstream device to adjust, in accordance with the third adjustment direction and the third adjustment quantity, the number of the predetermined type code blocks in the cell flow; when the actual phase position and the desired phase position in the designated device are consistent, restore the number of predetermined type code blocks of the cell flow in the upstream device into the first original code block number.

In an embodiment, the deviation information includes the phase position deviation direction; the predetermined code block adjustment control module 230 can be specifically configured to: determine a fourth adjustment direction of the predetermined type code blocks in the cell flow according to the phase position deviation direction when the actual speed value of the cell flow speed of the designated device and the desired speed value are consistent; record the number of predetermined type code blocks in the cell flow of the designated device as a second original code block number, and to control the designated device to adjust, according to the fourth adjustment direction, the number of predetermined type code blocks using a specified number of predetermined type code blocks; and restore the number of predetermined type code blocks of the cell flow in the designated device into the second original code block number when the actual phase position in the designated device is consistent with the desired phase position.

According to the cell flow characteristic value adjustment device in the embodiment of the disclosure, the designated node device can achieve the adaptation between a receiving direction of the designated node device and the desired cell flow characteristic value by controlling the cell flow characteristic value of the upstream node device, or by controlling the characteristic value of the sent cell flow of the designated node device, to ensure that the speed of the transmitted cell remains stable on the network, effectively solving the problem that the speed and phase of cell transmission are affected by the operating frequency and phase of each node system, and in such a way, the phase positions of the receiving and sending cell flows can be realized to coincide.

It is to be clear that the present disclosure is not limited to the particular configuration and processing as described in the above embodiments and illustrated in the figures. For the convenience and conciseness of the description, detailed descriptions of well-known methods are omitted herein. The specific working processes of the systems, modules and units described above can be referred to the corresponding processes in the preceding method embodiments, the description of which will not be repeated herein.

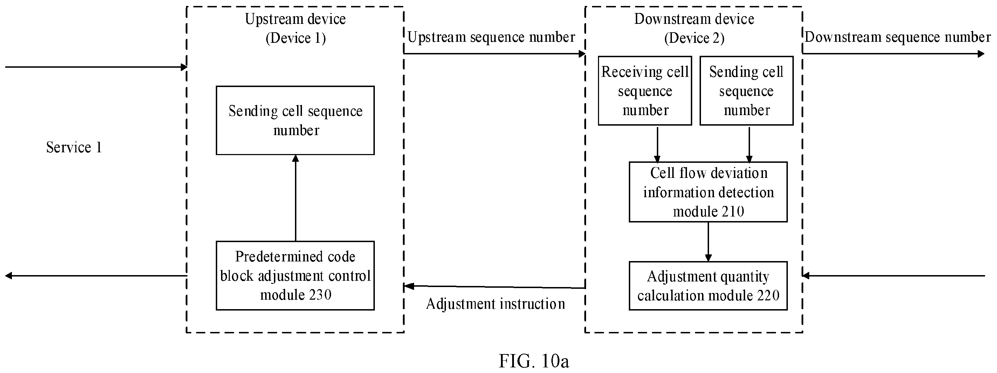

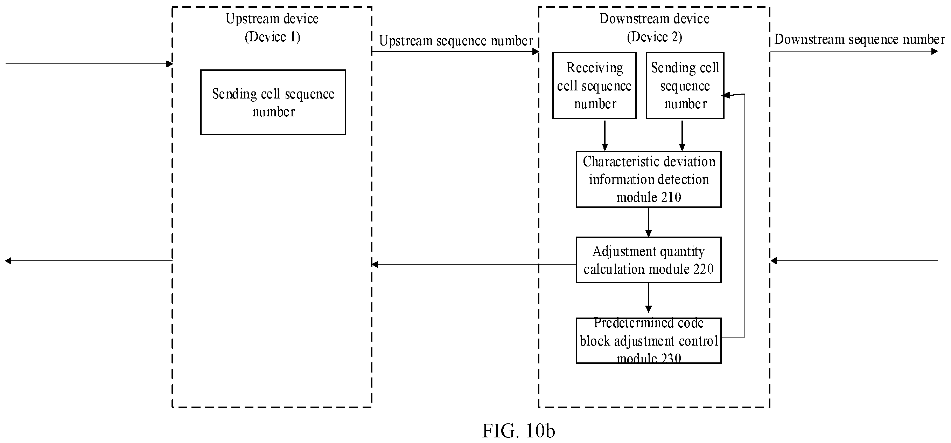

FIG. 10a is block diagram illustrating a structure of a device for adjusting a characteristic value of a cell flow according to a first exemplary embodiment of the present disclosure. FIG. 10b is block diagram illustrating a structure of a device for adjusting a characteristic value of a cell flow according to a second exemplary embodiment of the present disclosure.

As shown in FIG. 10a, the cell flow characteristic value adjustment device can include: a characteristic deviation information detection module 210, an adjustment quantity calculation module 220, and a predetermined code block adjustment control module 230. The same reference numerals are annotated for the same or equivalent structure in FIGS. 10a and FIG. 9.

Exemplarily, the characteristic deviation information detection module 210 and the adjustment quantity calculation module 220 may be located in a downstream device such as device 2, and the predetermined code block adjustment control module 230 may be located in an upstream device such as device 1.

In some embodiments, the cell characteristic value difference detection module 310 is configured to detect the difference between the characteristic value of the received cell flow characteristic value and the desired cell flow characteristic value, and determine the characteristic value status of the received cell. When the characteristic value of the cell flow does not meet the requirements, the direction and magnitude of the characteristic value deviation are given.

In some embodiments, the cell characteristic value difference detection module 310 may be further configured to detect only the direction of the characteristic value deviation without detecting the magnitude value of the characteristic value deviation.

The adjustment quantity calculation module 220 calculates the number and direction of IDLE block adjustments based on the magnitude and direction of the characteristic value deviation; or calculate the adjustment quantity of IDLE blocks of the upstream node device based on the magnitude of the deviation value of the characteristic value. Based on the deviation direction of the characteristic value, it is possible to know the direction of the IDLE block adjustment of the upstream node, i.e., whether to increase the number of IDLE blocks or to decrease the number of IDLE blocks, and specifically, whether to increase the number of IDLE blocks by a predetermined number of IDLE blocks or to decrease the number of IDLE blocks by a predetermined number of IDLE blocks per unit time or per unit length range from the original number.

The adjustment quantity calculation module 220 sends the calculated adjustment quantity and direction of the IDLE blocks to the upstream node. After the upstream node device receives the IDLE block adjustment quantity and direction instruction, the IDLE block adjustment quantity control module adjusts the number of IDLEs in the cell flow in a transmit port, and increases or decreases the number of IDLEs in the sent cell flow based on the calculated adjustment quantity and direction from the original quantity to meet the speed and phase requirements of the downstream node device. When the characteristic value is speed, the predetermined code block adjustment control module 230 controls the device 1 to increase or decrease the number of IDLEs in the sent cell flow from the original quantity, and maintains the adjusted state after the adjustment to proceed with the increased or decreased number of IDLE blocks for each time; when the characteristic value is phase, the predetermined code block adjustment control module 230 controls the device 1 to increase or decrease the number of IDLEs in the sending cell flow from the original number of IDLE blocks in the sending direction of the cell flow, and restores the number of IDLEs in the sending cell flow in the original device 1 after the adjustment, that is, the device 1 remains in the pre-adjusted state after the adjustment to proceed with the number of IDLE blocks with the IDLEs unchanged.

In some embodiments, the characteristic value calculation module 220 may calculate only the IDLE block adjustment direction but not the IDLE adjustment quantity. In particular, when the characteristic deviation information detection module 210 only detects the deviation direction of the characteristic value but not the deviation magnitude of the characteristic value, so that only the IDLE block adjustment direction is calculated. The predetermined code block adjustment control module 230 adjusts a predetermined number of IDLE blocks at one time (e.g., only 1 IDLE block, or several IDLE blocks at one time) in accordance with the adjustment direction. When the adjustment still does not meet the desired characteristic value requirements, the characteristic deviation information detection module 210 continues to detect deviations, and the adjustment quantity calculation module 220 continues to provide the adjustment direction, and the predefined block adjustment control module 230 continues to adjust in accordance with the adjustment direction until the characteristic value deviation information meets the requirements. In practical applications, the IDLE block quantity control module can also adjust the number of O blocks to adjust the speed and phase of the cell flow in addition to adjusting the number of IDLE blocks to adjust the speed and phase of the cell flow (when the O blocks are present in the cell flow).

As illustrated in FIG. 10b, the cell flow characteristic value adjustment device may include: a characteristic deviation information detection module 210, an adjustment quantity calculation module 220, and a predetermined code block adjustment control module 230. The same reference numerals are annotated for the same or equivalent structure in FIGS. 10b and 10a.

FIG. 10b differs from FIG. 10a in that the adjustment quantity calculation module 220 may be located in device 2. That is, the adjustment quantity calculation module 220 may adjust the number of predetermined type code blocks in the sent cell flow within a predetermined period or a predetermined data stream length at device 2 based on the characteristic deviation information of the cell flow characteristic value between the actual characteristic value and the desired characteristic value.

When the characteristic value is speed, the predetermined code block adjustment control module 230 controls the device 2 to increase or decrease the number of IDLEs in the sent cell flow from the original quantity, and maintains the adjusted state after the adjustment to proceed with the increased or decreased number of IDLE blocks for each time; when the characteristic value is phase, the adjustment quantity calculation module controls the device 2 to increase or decreases the number of IDLEs in the sending cell flow and restores the number of IDLEs in the original sending cell flow after the adjustment, that is, the pre-adjusted state is still maintained after the adjustment to proceed with the number of IDLE blocks with the IDLEs unchanged.

In this embodiment of the disclosure, the positions of the characteristic deviation information detection module 210, the adjustment quantity calculation module 220, and the predetermined code block adjustment control module 230 illustrated in FIGS. 10a and 10b can be arranged flexibly. Some of the characteristic deviation information detection module 210, the adjustment quantity calculation module 220 and the predetermined code block adjustment control module 230 may be in the downstream device and some of the modules in the upstream device.

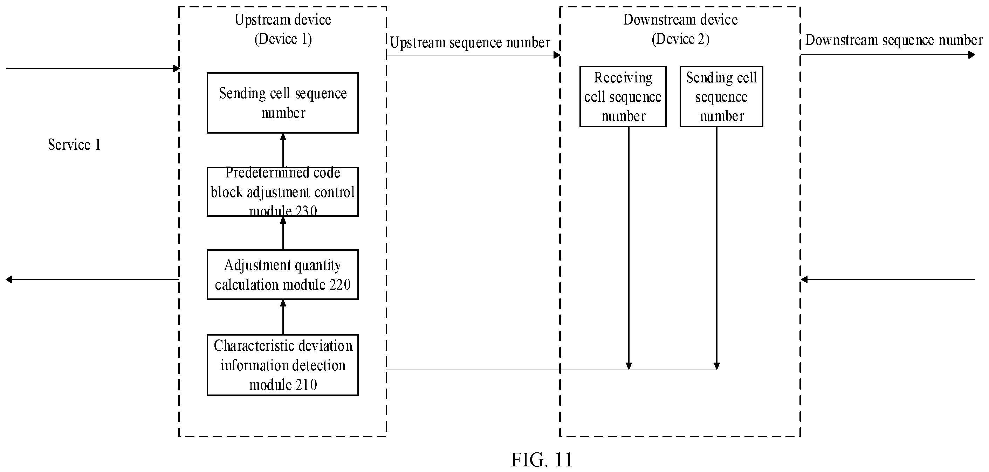

FIG. 11 is block diagram illustrating a structure of a device for adjusting a characteristic value of a cell flow according to a third exemplary embodiment of the present disclosure. As shown in FIG. 11, the cell characteristic value deviation detection module 210, the adjustment quantity calculation module 220, and the predetermined code block adjustment control module 230 may all be in the upstream device. The downstream device simply provides the sequence number value of the received cell and the sequence number value of the sent cell at the same moment.

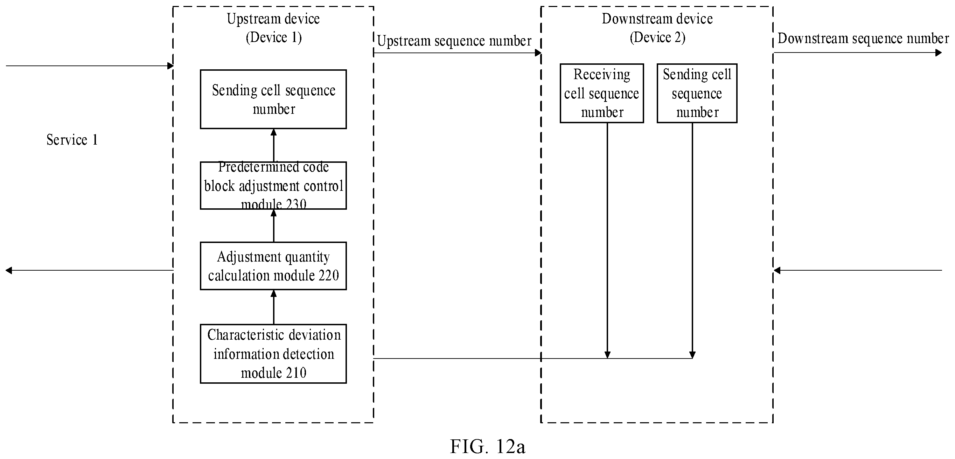

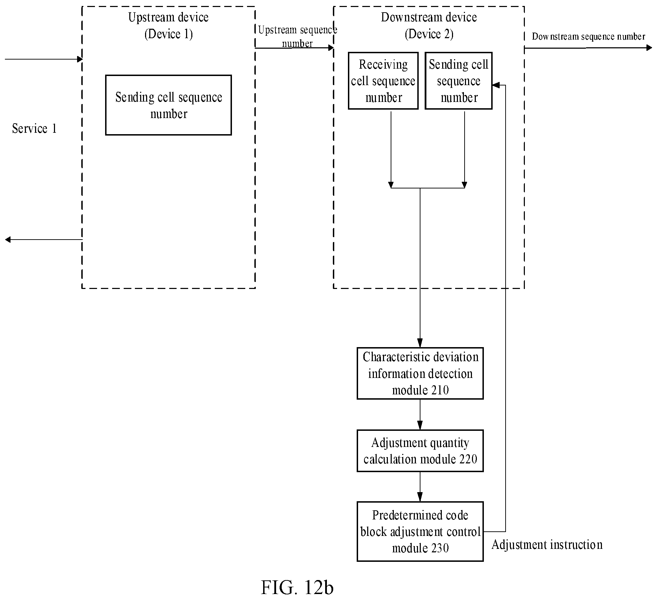

FIG. 12a is block diagram illustrating a structure of a device for adjusting a characteristic value of a cell flow according to a fourth exemplary embodiment of the present disclosure. FIG. 12b is block diagram illustrating a structure of a device for adjusting a characteristic value of a cell flow according to a fifth exemplary embodiment of the present disclosure. The same reference numerals are annotated for the same or equivalent structure in FIGS. 12a and 12b and FIG. 10a.

As shown in FIG. 12a, the characteristic deviation information detection module 210 and the adjustment quantity calculation module 220 may be external to the device, and the predetermined code block adjustment control module 230 is located in an upstream device such as device 1. That is, in practical applications, some of the functional modules may be implemented by a computer or device external to the device, such as the characteristic deviation information detection module 210 and the adjustment quantity calculation module 220 are external to the device and implemented by an external computer or device, for example.

It should be clear that the present disclosure is not limited to the particular configuration and processing described in the above embodiments and illustrated in the figures. For convenience and conciseness of description, detailed descriptions of known methods are omitted herein, and the specific processes of operation of the systems, modules and units described above can be referred to the corresponding processes in the preceding method embodiments and will not be repeated herein.

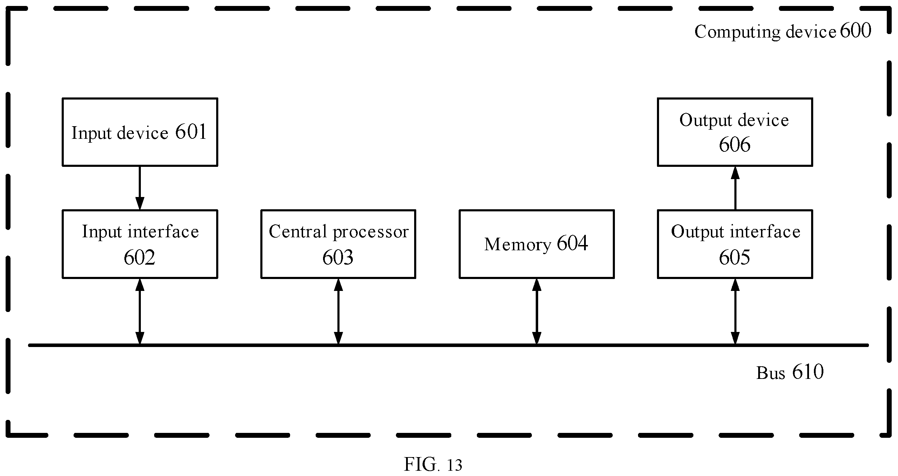

FIG. 13 is block diagram illustrating exemplary hardware architecture of a computing device capable of implementing the method and device for adjusting the characteristic value of the cell flow according to the embodiments of the present disclosure.

As shown in FIG. 13, a computing device 600 includes an input device 601, an input interface 602, a central processor 603, a memory 604, an output interface 605, and an output device 606, wherein the input interface 602, the central processor 603, the memory 604, and the output interface 605 are interconnected via a bus 610, and the input device 601 and the output device 606 are connected to the bus 610 through the input interface 602 and the output interface 605, respectively, and thus to other components of the computing device 600.

Specifically, the input device 601 receives input information from the outside and transmits the input information to the central processor 603 through the input interface 602; the central processor 603 processes the input information to generate output information based on computer-executable instructions stored in the memory 604, stores the output information temporarily or permanently in the memory 604, and then transmits, through the output interface 605, the output information to the output device 606; the output device 606 outputs the output information to the outside of the computing device 600 for use by a user.

In an embodiment, the computing device 600 shown in FIG. 13 may be implemented as a cell flow characteristic value adjustment system, which may include: a memory configured to store a program; and a processor configured to run the program stored in the memory to perform any of the cell flow characteristic value adjustment methods described in the above embodiments of the present disclosure.

The foregoing are only exemplary embodiments of the present disclosure which are not intended to limit the scope of protection of the present disclosure.

It should be understood by a person skilled in the art that the term "user terminal" covers any suitable type of wireless user device, such as a cell phone, a portable data processing device, a portable web browser, or an in-vehicle mobile station.

In general, the embodiments of the present disclosure can be implemented in hardware or specialized circuitry, software, logic, or any combination thereof. For example, some aspects may be implemented in hardware, while other aspects may be implemented in firmware or software that can be executed by a controller, microprocessor, or other computing device, although the present disclosure is not limited thereto.

The embodiments of the present disclosure may be implemented by the execution of computer program instructions by a data processor of a mobile device, such as in a processor entity, or by hardware, or by a combination of software and hardware. The computer program instructions may be assembly instructions, instruction set architecture (ISA) instructions, machine instructions, machine-related instructions, microcode, firmware instructions, state setting data, or source or object code written in any combination of one or more programming languages.

Any block diagram of the logic flow in the accompanying drawings of this disclosure may represent program steps, or may represent interconnected logic circuits, modules, and functions, or may represent a combination of program steps and logic circuits, modules, and functions. The computer program may be stored on a memory. The memory may be of any type suitable for the local technical environment and may be implemented using any suitable data storage technology, such as, but not limited to, read-only memory (ROM), random access memory (RAM), optical memory devices and systems (digital versatile disc DVD or CD-ROM), etc. Computer readable media may include non-instantaneous storage media. Data processors may be of any type suitable for the local technical environment, such as, but not limited to, general purpose computers, special purpose computers, microprocessors, digital signal processors (DSPs), application specific integrated circuits (ASICs), programmable logic devices (FGPAs), and processors based on multi-core processor architectures.

By way of exemplary and non-limiting examples, a detailed description of exemplary embodiments of the present disclosure has been provided above. However, when considered in conjunction with the accompanying drawings and claims, a variety of modifications and adaptations to the above embodiments will be apparent to those skilled in the art, but do not depart from the scope of the present disclosure. Accordingly, the proper scope of the present disclosure will be determined in accordance with the claims.

## Claims

1. A cell flow characteristic value adjustment method, applied to a cell having a fixed length, comprising:
detecting (S110) deviation information of an actual characteristic value and a desired characteristic value of a cell flow characteristic of a designated device; and
controlling (S120) one of the designated device and an upstream device of the designated device to adjust the number of predetermined type code blocks in the sent cell flow based on the deviation information to adjust the actual characteristic value of the cell flow characteristics of the designated device,
wherein the detecting (S110) the deviation information of the actual characteristic value and the desired characteristic value of the cell flow characteristic of the designated device, comprises:
responsive to determining that the cell flow characteristic is a cell flow speed, detecting speed deviation information of an actual speed value and a desired speed value of a cell flow speed of the designated device; and
responsive to determining that the cell flow characteristic is a cell flow phase, detecting phase position deviation information of the actual phase position and the desired phase position of the cell flow phase of the designated device.

2. The method according to claim 1, wherein the actual speed value is a speed value determined based on the number of cells in a receiving direction detected by the designated device per unit time, and the desired speed value is an effective transmission speed value of the cell flow of the designated device; and
the actual phase position is a phase position of the cell flow received by the designated device, and the desired phase position is a phase position of the sent cell flow of the designated device.

3. The method according to claim 2, wherein responsive to determining that the cell flow characteristic is the cell flow speed, the speed deviation information includes a speed deviation value and a speed deviation direction, and the detecting the speed deviation information of the actual speed value and the desired speed value of the cell flow speed of the designated device, comprises:
determining, based on detected value change information of a first predetermined detection parameter in the designated device, the speed deviation direction of the actual speed value and the desired speed value.

4. The method according to claim 3, wherein the determining, based on the detected value change information of the first predetermined detection parameter in the designated device, the speed deviation direction of the actual speed value and the desired speed value, comprises:
detecting a speed of a received cell flow and a speed of the sent cell flow of the designated device;
determining the speed deviation direction to be a direction greater than the desired speed if the speed of the received cell flow is greater than the speed of the sent cell flow; and
determining the speed deviation direction to be a direction less than the desired speed if the speed of the received cell flow is less than the speed of the sent cell flow.

5. The method according to claim 3, wherein the determining, based on the detected value change information of the first predetermined detection parameter in the designated device, the speed deviation direction of the actual speed value and the desired speed value, comprises:
detecting, within a first predetermined duration, a sequence number value carried by a received cell flow and a sequence number value carried by the sent cell flow of the designated device at each specified moment;
determining the speed deviation direction to be a direction greater than the desired speed if a sequence number difference value between the sequence number value carried by the received cell flow and the sequence number value carried by the sent cell flow increases within the first predetermined duration; and
determining the speed deviation direction to be a direction less than the desired speed if the sequence number difference value decreases within the first predetermined duration.

6. The method according to claim 3, wherein the determining, based on the detected value change information of the first predetermined detection parameter in the designated device, the speed deviation direction of the actual speed value and the desired speed value, comprises:
detecting a storage capacity of a cell cache of the designated device at each specified moment during a second predetermined duration;
determining the speed deviation direction to be a direction greater than the desired speed if the storage capacity increases during the second predetermined duration;
determining the speed deviation direction to be a direction less than the desired speed if the storage capacity decreases during the second predetermined duration.

7. The method according to claim 2, wherein responsive to determining that the cell flow characteristic is the cell flow speed, the speed deviation information includes a speed deviation value and a speed deviation direction, and the detecting the speed deviation information of the actual speed value and the desired speed value of the cell flow speed of the designated device, comprises:
determining the speed deviation value of the cell flow using a detected value of a first predetermined detection parameter in the designated device; and
determining, based on detected value change information of the first predetermined detection parameter in the designated device, the speed deviation direction of the actual speed value and the desired speed value, and
wherein the determining the speed deviation value of the cell flow using the detected value of the first predetermined detection parameter in the designated device, comprises:
detecting a speed of a received cell flow and a speed of the sent cell flow in the designated device;
or, determining, within a predetermined time duration, the speed of the received cell flow and the speed of the sent cell flow in the designated device based on a detected sequence number value carried by the received cell flow and a detected sequence number value carried by the sent cell flow of the designated device at each specified moment; and
taking an absolute value of a speed difference between the speed of the received cell flow and the speed of the sent cell flow as the speed deviation value of the cell flow speed.

8. The method according to claim 2, wherein responsive to determining that the cell flow characteristic is the cell flow phase, the phase position deviation information includes a phase position deviation direction and a phase position deviation value, and the detecting the phase position deviation information of the actual phase position and the desired phase position of the cell flow phase of the designated device, comprises:
determining the phase position deviation direction of the actual phase position and the desired phase position based on a relative relationship between a detected parameter value in a receiving direction and a detected parameter value in a sending direction of a second predetermined detection parameter of the designated device.

9. The method according to claim 8, wherein the determining the phase position deviation direction of the actual phase position and the desired phase position based on the relative relationship between the detected parameter value in the receiving direction and the detected parameter value in the sending direction of the second predetermined detection parameter of the designated device, comprises:
determining the phase position deviation direction to be a direction greater than the desired phase position if the phase position of the received cell flow in the designated device is detected to be ahead of the phase position of the sent cell flow; and
determining the phase position deviation direction to be a direction less than the desired phase position if the phase position of the received cell flow of the designated device is detected to be lagging behind the phase position of the sent cell flow.

10. The method according to claim 2, wherein the phase position deviation information includes a phase position deviation direction and a phase position deviation value; and the detecting the phase position deviation information of the actual phase position and the desired phase position of the cell flow phase of the designated device, comprises:
calculating the phase position deviation value between the actual phase position and the desired phase position based on the difference between a detected parameter value in the receiving direction and a detected parameter value in the sending direction of a second predetermined detection parameter of the designated device; and
determining the phase position deviation direction of the actual phase position and the desired phase position based on a relative relationship between the detected parameter value in the receiving direction and the detected parameter value in the sending direction of the second predetermined detection parameter of the designated device,
wherein the calculating the phase position deviation value between the actual phase position and the desired phase position based on the difference between the detected parameter value in the receiving direction and the detected parameter value in the sending direction of the second predetermined detection parameter of the designated device, comprises:
detecting a phase position of the received cell flow and a phase position of the sent cell flow in the designated device;
or, determining the phase position of the received cell flow and the phase position of the sent cell flow in the designated device based on a detected sequence number value carried by the received cell flow and a detected sequence number value carried by the sent cell flow in the designated device;
taking an absolute value of a position difference between the phase position of the received cell flow and the phase position of the sent cell flow as the phase position deviation value between the actual phase position and the desired phase position.

11. The method according to claim 1, wherein the deviation information includes a speed deviation value and a speed deviation direction; and the controlling (S120) one of the designated device and the upstream device of the designated device to adjust the number of predetermined type code blocks in the sent cell flow based on the deviation information, comprises:
determining a first adjustment quantity and a first adjustment direction of the predetermined type code block according to the speed deviation value and the speed deviation direction;
controlling the upstream device of the designated device to adjust, in accordance with the first adjustment direction and the first adjustment quantity, the number of predetermined type code blocks of the cell flow within the predetermined period or the predetermined data stream length;
or, controlling the designated device to adjust, in accordance with an opposite direction of the first adjustment direction and the first adjustment quantity, the number of predetermined type code blocks of the cell flow within the predetermined period or the predetermined data stream length.

12. The method according to claim 1, wherein the deviation information includes a speed deviation direction; and the controlling (S120) one of the designated device and the upstream device of the designated device to adjust the number of predetermined type code blocks in the sent cell flow based on the deviation information, comprises:
determining a second adjustment direction of the predetermined type code block according to the speed deviation direction;
controlling the upstream device of the designated device to adjust, in accordance with the second adjustment direction, the number of predetermined type code blocks of the sent cell flow within the predetermined period or the predetermined data stream length using a specified number of predetermined type blocks;
or, controlling the designated device to adjust, in accordance with an opposite direction of the second adjustment direction, the number of predetermined type code blocks of the cell flow within the predetermined period or the predetermined data stream length using a specified number of predetermined type code blocks.

13. The method according to claim 1, wherein the cell flow characteristic is a cell flow speed, and after adjusting the number of predetermined type code blocks of the cell flow within the predetermined period or the predetermined data stream length, the method further comprises:
selecting a cell flow phase as the cell flow characteristic when an actual speed value and a desired speed value of the cell flow speed of the designated device are detected to be consistent;
detecting phase position deviation information of an actual phase position and a desired phase position of the cell flow phase in the designated device;
controlling one of the designated device or the upstream device of the designated device to adjust, based on the phase position deviation information, the number of predetermined type code blocks in the sent cell flow to adjust the actual phase position of the cell flow characteristic in the designated device.

14. The method according to claim 1, wherein the cell flow characteristic is a cell flow phase, and the controlling (S120) one of the designated device and the upstream device of the designated device to adjust the number of predetermined type code blocks in the sent cell flow based on the deviation information, comprises:
selecting a cell flow speed as the cell flow characteristic, detecting speed deviation information of an actual speed value and a desired speed value of the cell flow speed in the designated device, and controlling one of the designated device and the upstream device of the designated device to adjust, according to the speed deviation information, the number of predetermined type code blocks of the sent cell flow within the predetermined period or the predetermined data stream length;
selecting a cell flow phase as the cell flow characteristic when the actual speed value and the desired speed value of the cell flow speed in the designated device are consistent;
detecting phase position deviation information of the actual phase position and the desired phase position of the cell flow phase in the designated device; and
controlling one of the designated device and the upstream device of the designated device to adjust, according to the phase position deviation information, the number of predetermined type code blocks of the sent cell flow.

15. A cell flow characteristic value adjustment device, applied to a cell having a fixed length, comprising
a characteristic deviation information detection module (210) configured to detect deviation information of an actual characteristic value and a desired characteristic value of a cell flow characteristic of a designated device; and
a predetermined code block adjustment control module (230) configured to control one of the designated device and an upstream device of the designated device to adjust the number of predetermined type code blocks in the sent cell flow based on the deviation information to adjust the actual characteristic value of the cell flow characteristic of the designated device,
wherein the characteristic deviation information detection module (210) is further configured to: responsive to determining that the cell flow characteristic is a cell flow speed, detect speed deviation information of an actual speed value and a desired speed value of a cell flow speed of the designated device; and responsive to determining that the cell flow characteristic is a cell flow phase, detect phase position deviation information of the actual phase position and the desired phase position of the cell flow phase of the designated device.

## Patentansprüche

1. Verfahren zur Anpassung eines Zellflusseigenschaftswerts, das auf eine Zelle mit einer festen Länge angewandt wird, umfassend:
Detektieren (S110) von Abweichungsinformationen eines tatsächlichen Eigenschaftswerts und eines gewünschten Eigenschaftswerts einer Zellflusseigenschaft einer bestimmten Vorrichtung; und
Steuern (S120) der bestimmten Vorrichtung oder einer vorgeschalteten Vorrichtung der bestimmten Vorrichtung, um die Anzahl von Codeblöcken eines vorbestimmten Typs in dem gesendeten Zellfluss auf der Basis der Abweichungsinformationen anzupassen, um den tatsächlichen Eigenschaftswert der Zellflusseigenschaften der bestimmten Vorrichtung anzupassen,
wobei das Detektieren (S110) der Abweichungsinformationen des tatsächlichen Eigenschaftswerts und des gewünschten Eigenschaftswerts der Zellflusseigenschaft der bestimmten Vorrichtung umfasst:
als Reaktion auf das Bestimmen, dass die Zellflusseigenschaft eine Zellflussgeschwindigkeit ist, Detektieren von Geschwindigkeitsabweichungsinformationen eines tatsächlichen Geschwindigkeitswerts und eines gewünschten Geschwindigkeitswerts einer Zellflussgeschwindigkeit der bestimmten Vorrichtung; und
als Reaktion auf das Bestimmen, dass die Zellflusseigenschaft eine Zellflussphase ist, Detektieren von Phasenpositions-Abweichungsinformationen der tatsächlichen Phasenposition und der gewünschten Phasenposition der Zellflussphase der bestimmten Vorrichtung.

2. Verfahren nach Anspruch 1, wobei der tatsächliche Geschwindigkeitswert ein Geschwindigkeitswert ist, der auf der Basis der Anzahl von Zellen in einer Empfangsrichtung bestimmt wird, die von der bestimmten Vorrichtung pro Zeiteinheit detektiert wird, und der gewünschte Geschwindigkeitswert ein effektiver Übertragungsgeschwindigkeitswert des Zellflusses der bestimmten Vorrichtung ist; und
die tatsächliche Phasenposition eine Phasenposition des Zellflusses ist, der von der bestimmten Vorrichtung empfangen wird, und die gewünschte Phasenposition eine Phasenposition des gesendeten Zellflusses der bestimmten Vorrichtung ist.

3. Verfahren nach Anspruch 2, wobei als Reaktion auf das Bestimmen, dass die Zellflusseigenschaft die Zellflussgeschwindigkeit ist, die Geschwindigkeitsabweichungsinformationen einen Geschwindigkeitsabweichungswert und eine Geschwindigkeitsabweichungsrichtung einschließen, und das Detektieren der Geschwindigkeitsabweichungsinformationen des tatsächlichen Geschwindigkeitswerts und des gewünschten Geschwindigkeitswerts der Zellflussgeschwindigkeit der bestimmten Vorrichtung umfasst:
Bestimmen, auf der Basis von detektierten Wertänderungsinformationen eines ersten vorbestimmten Detektionsparameters in der bestimmten Vorrichtung, der Geschwindigkeitsabweichungsrichtung des tatsächlichen Geschwindigkeitswerts und des gewünschten Geschwindigkeitswerts.

4. Verfahren nach Anspruch 3, wobei das Bestimmen, auf der Basis der detektierten Wertänderungsinformationen des ersten vorbestimmten Detektionsparameters in der bestimmten Vorrichtung, der Geschwindigkeitsabweichungsrichtung des tatsächlichen Geschwindigkeitswerts und des gewünschten Geschwindigkeitswerts umfasst:
Detektieren einer Geschwindigkeit eines empfangenen Zellflusses und einer Geschwindigkeit des gesendeten Zellflusses der bestimmten Vorrichtung;
Bestimmen, dass die Geschwindigkeitsabweichungsrichtung eine Richtung ist, die größer als die gewünschte Geschwindigkeit ist, wenn die Geschwindigkeit des empfangenen Zellflusses größer als die Geschwindigkeit des gesendeten Zellflusses ist; und
Bestimmen, dass die Geschwindigkeitsabweichungsrichtung eine Richtung ist, die kleiner als die gewünschte Geschwindigkeit ist, wenn die Geschwindigkeit des empfangenen Zellflusses kleiner als die Geschwindigkeit des gesendeten Zellflusses ist.

5. Verfahren nach Anspruch 3, wobei das Bestimmen, auf der Basis der detektierten Wertänderungsinformationen des ersten vorbestimmten Detektionsparameters in der bestimmten Vorrichtung, der Geschwindigkeitsabweichungsrichtung des tatsächlichen Geschwindigkeitswerts und des gewünschten Geschwindigkeitswerts umfasst:
Detektieren, innerhalb einer ersten vorbestimmten Dauer, eines Sequenznummerwerts, der von einem empfangenen Zellfluss getragen wird, und eines Sequenznummerwerts, der von dem gesendeten Zellfluss der bestimmten Vorrichtung getragen wird, zu jedem spezifizierten Zeitpunkt;
Bestimmen, dass die Geschwindigkeitsabweichungsrichtung eine Richtung ist, die größer als die gewünschte Geschwindigkeit ist, wenn ein Sequenznummerdifferenzwert zwischen dem Sequenznummerwert, der von dem empfangenen Zellfluss getragen wird, und dem Sequenznummerwert, der von dem gesendeten Zellfluss getragen wird, innerhalb der ersten vorbestimmten Dauer zunimmt; und
Bestimmen, dass die Geschwindigkeitsabweichungsrichtung eine Richtung ist, die kleiner als die gewünschte Geschwindigkeit ist, wenn der Sequenznummerdifferenzwert innerhalb der ersten vorbestimmten Dauer abnimmt.

6. Verfahren nach Anspruch 3, wobei das Bestimmen, auf der Basis der detektierten Wertänderungsinformationen des ersten vorbestimmten Detektionsparameters in der bestimmten Vorrichtung, der Geschwindigkeitsabweichungsrichtung des tatsächlichen Geschwindigkeitswerts und des gewünschten Geschwindigkeitswerts umfasst:
Detektieren einer Speicherkapazität eines Zellzwischenspeichers der bestimmten Vorrichtung zu jedem spezifizierten Zeitpunkt während einer zweiten vorbestimmten Dauer;
Bestimmen, dass die Geschwindigkeitsabweichungsrichtung eine Richtung ist, die größer als die gewünschte Geschwindigkeit ist, wenn die Speicherkapazität während der zweiten vorbestimmten Dauer zunimmt;
Bestimmen, dass die Geschwindigkeitsabweichungsrichtung eine Richtung ist, die kleiner als die gewünschte Geschwindigkeit ist, wenn die Speicherkapazität während der zweiten vorbestimmten Dauer abnimmt.

7. Verfahren nach Anspruch 2, wobei als Reaktion auf das Bestimmen, dass die Zellflusseigenschaft die Zellflussgeschwindigkeit ist, die Geschwindigkeitsabweichungsinformationen einen Geschwindigkeitsabweichungswert und eine Geschwindigkeitsabweichungsrichtung einschließen, und das Detektieren der Geschwindigkeitsabweichungsinformationen des tatsächlichen Geschwindigkeitswerts und des gewünschten Geschwindigkeitswerts der Zellflussgeschwindigkeit der bestimmten Vorrichtung umfasst:
Bestimmen des Geschwindigkeitsabweichungswerts des Zellflusses unter Verwenden eines detektierten Werts eines ersten vorbestimmten Detektionsparameters in der bestimmten Vorrichtung; und
Bestimmen, auf der Basis von detektierten Wertänderungsinformationen des ersten vorbestimmten Detektionsparameters in der bestimmten Vorrichtung, der Geschwindigkeitsabweichungsrichtung des tatsächlichen Geschwindigkeitswerts und des gewünschten Geschwindigkeitswerts, und
wobei das Bestimmen des Geschwindigkeitsabweichungswerts des Zellflusses unter Verwenden des detektierten Werts des ersten vorbestimmten Detektionsparameters in der bestimmten Vorrichtung umfasst:
Detektieren einer Geschwindigkeit eines empfangenen Zellflusses und einer Geschwindigkeit des gesendeten Zellflusses in der bestimmten Vorrichtung;
oder Bestimmen, innerhalb einer vorbestimmten Zeitdauer, der Geschwindigkeit des empfangenen Zellflusses und der Geschwindigkeit des gesendeten Zellflusses in der bestimmten Vorrichtung auf der Basis eines detektierten Sequenznummerwerts, der von dem empfangenen Zellfluss getragen wird, und eines detektierten Sequenznummerwerts, der von dem gesendeten Zellfluss der bestimmten Vorrichtung getragen wird, zu jedem spezifizierten Zeitpunkt; und
Nehmen eines Absolutwerts einer Geschwindigkeitsdifferenz zwischen der Geschwindigkeit des empfangenen Zellflusses und der Geschwindigkeit des gesendeten Zellflusses als den Geschwindigkeitsabweichungswert der Zellflussgeschwindigkeit.

8. Verfahren nach Anspruch 2, wobei als Reaktion auf das Bestimmen, dass die Zellflusseigenschaft die Zellflussphase ist, die Phasenpositions-Abweichungsinformationen eine Phasenpositions-Abweichungsrichtung und einen Phasenpositions-Abweichungswert einschließen, und das Detektieren der Phasenpositions-Abweichungsinformationen der tatsächlichen Phasenposition und der gewünschten Phasenposition der Zellflussphase der bestimmten Vorrichtung umfasst:
Bestimmen der Phasenpositions-Abweichungsrichtung der tatsächlichen Phasenposition und der gewünschten Phasenposition auf der Basis einer relativen Beziehung zwischen einem detektierten Parameterwert in einer Empfangsrichtung und einem detektierten Parameterwert in einer Senderichtung eines zweiten vorbestimmten Detektionsparameters der bestimmten Vorrichtung.

9. Verfahren nach Anspruch 8, wobei das Bestimmen der Phasenpositions-Abweichungsrichtung der tatsächlichen Phasenposition und der gewünschten Phasenposition auf der Basis der relativen Beziehung zwischen dem detektierten Parameterwert in der Empfangsrichtung und dem detektierten Parameterwert in der Senderichtung des zweiten vorbestimmten Detektionsparameters der bestimmten Vorrichtung umfasst:
Bestimmen, dass die Phasenpositions-Abweichungsrichtung eine Richtung ist, die größer als die gewünschte Phasenposition ist, wenn detektiert wird, dass die Phasenposition des empfangenen Zellflusses in der bestimmten Vorrichtung vor der Phasenposition des gesendeten Zellflusses liegt; und
Bestimmen, dass die Phasenpositions-Abweichungsrichtung eine Richtung ist, die kleiner als die gewünschte Phasenposition ist, wenn detektiert wird, dass die Phasenposition des empfangenen Zellflusses der bestimmten Vorrichtung hinter der Phasenposition des gesendeten Zellflusses liegt.

10. Verfahren nach Anspruch 2, wobei die Phasenpositions-Abweichungsinformationen eine Phasenpositions-Abweichungsrichtung und einen Phasenpositions-Abweichungswert einschließen; und das Detektieren der Phasenpositions-Abweichungsinformationen der tatsächlichen Phasenposition und der gewünschten Phasenposition der Zellflussphase der bestimmten Vorrichtung umfasst:
Berechnen des Phasenpositions-Abweichungswerts zwischen der tatsächlichen Phasenposition und der gewünschten Phasenposition auf der Basis der Differenz zwischen einem detektierten Parameterwert in der Empfangsrichtung und einem detektierten Parameterwert in der Senderichtung eines zweiten vorbestimmten Detektionsparameters der bestimmten Vorrichtung; und
Bestimmen der Phasenpositions-Abweichungsrichtung der tatsächlichen Phasenposition und der gewünschten Phasenposition auf der Basis einer relativen Beziehung zwischen dem detektierten Parameterwert in der Empfangsrichtung und dem detektierten Parameterwert in der Senderichtung des zweiten vorbestimmten Detektionsparameters der bestimmten Vorrichtung,
wobei das Berechnen des Phasenpositions-Abweichungswerts zwischen der tatsächlichen Phasenposition und der gewünschten Phasenposition auf der Basis der Differenz zwischen dem detektierten Parameterwert in der Empfangsrichtung und dem detektierten Parameterwert in der Senderichtung des zweiten vorbestimmten Detektionsparameters der bestimmten Vorrichtung umfasst:
Detektieren einer Phasenposition des empfangenen Zellflusses und einer Phasenposition des gesendeten Zellflusses in der bestimmten Vorrichtung;
oder Bestimmen der Phasenposition des empfangenen Zellflusses und der Phasenposition des gesendeten Zellflusses in der bestimmten Vorrichtung auf der Basis eines detektierten Sequenznummerwerts, der von dem empfangenen Zellfluss getragen wird, und eines detektierten Sequenznummerwerts, der von dem gesendeten Zellfluss in der bestimmten Vorrichtung getragen wird;
Nehmen eines Absolutwerts einer Positionsdifferenz zwischen der Phasenposition des empfangenen Zellflusses und der Phasenposition des gesendeten Zellflusses als den Phasenpositions-Abweichungswert zwischen der tatsächlichen Phasenposition und der gewünschten Phasenposition.

11. Verfahren nach Anspruch 1, wobei die Abweichungsinformationen einen Geschwindigkeitsabweichungswert und eine Geschwindigkeitsabweichungsrichtung einschließen; und das Steuern (S120) der bestimmten Vorrichtung oder der vorgeschalteten Vorrichtung der bestimmten Vorrichtung, um die Anzahl von Codeblöcken eines vorbestimmten Typs in dem gesendeten Zellfluss auf der Basis der Abweichungsinformationen anzupassen, umfasst:
Bestimmen einer ersten Anpassungsgröße und einer ersten Anpassungsrichtung des Codeblocks eines vorbestimmten Typs gemäß dem Geschwindigkeitsabweichungswert und der Geschwindigkeitsabweichungsrichtung;
Steuern der vorgeschalteten Vorrichtung der bestimmten Vorrichtung, um gemäß der ersten Anpassungsrichtung und der ersten Anpassungsgröße die Anzahl von Codeblöcken eines vorbestimmten Typs des Zellflusses innerhalb des vorbestimmten Zeitraums oder der vorbestimmten Datenstromlänge anzupassen;
oder Steuern der bestimmten Vorrichtung, um gemäß einer entgegengesetzten Richtung der ersten Anpassungsrichtung und der ersten Anpassungsgröße die Anzahl von Codeblöcken eines vorbestimmten Typs des Zellflusses innerhalb des vorbestimmten Zeitraums oder der vorbestimmten Datenstromlänge anzupassen.

12. Verfahren nach Anspruch 1, wobei die Abweichungsinformationen eine Geschwindigkeitsabweichungsrichtung einschließen; und das Steuern (S120) der bestimmten Vorrichtung oder der vorgeschalteten Vorrichtung der bestimmten Vorrichtung, um die Anzahl von Codeblöcken eines vorbestimmten Typs in dem gesendeten Zellfluss auf der Basis der Abweichungsinformationen anzupassen, umfasst:
Bestimmen einer zweiten Anpassungsrichtung des Codeblocks eines vorbestimmten Typs gemäß der Geschwindigkeitsabweichungsrichtung;
Steuern der vorgeschalteten Vorrichtung der bestimmten Vorrichtung, um gemäß der zweiten Anpassungsrichtung die Anzahl von Codeblöcken eines vorbestimmten Typs des gesendeten Zellflusses innerhalb des vorbestimmten Zeitraums oder der vorbestimmten Datenstromlänge unter Verwenden einer spezifizierten Anzahl von Blöcken eines vorbestimmten Typs anzupassen;
oder Steuern der bestimmten Vorrichtung, um gemäß einer entgegengesetzten Richtung der zweiten Anpassungsrichtung die Anzahl von Codeblöcken eines vorbestimmten Typs des Zellflusses innerhalb des vorbestimmten Zeitraums oder der vorbestimmten Datenstromlänge unter Verwenden einer spezifizierten Anzahl von Codeblöcken eines vorbestimmten Typs anzupassen.

13. Verfahren nach Anspruch 1, wobei die Zellflusseigenschaft eine Zellflussgeschwindigkeit ist, und nach dem Anpassen der Anzahl von Codeblöcken eines vorbestimmten Typs des Zellflusses innerhalb des vorbestimmten Zeitraums oder der vorbestimmten Datenstromlänge das Verfahren ferner umfasst:
Auswählen einer Zellflussphase als die Zellflusseigenschaft, wenn detektiert wird, dass ein tatsächlicher Geschwindigkeitswert und ein gewünschter Geschwindigkeitswert der Zellflussgeschwindigkeit der bestimmten Vorrichtung konsistent sind;
Detektieren von Phasenpositions-Abweichungsinformationen einer tatsächlichen Phasenposition und einer gewünschten Phasenposition der Zellflussphase in der bestimmten Vorrichtung;
Steuern der bestimmten Vorrichtung oder der vorgeschalteten Vorrichtung der bestimmten Vorrichtung, um auf der Basis der Phasenpositions-Abweichungsinformationen die Anzahl von Codeblöcken eines vorbestimmten Typs in dem gesendeten Zellfluss anzupassen, um die tatsächliche Phasenposition der Zellflusseigenschaft in der bestimmten Vorrichtung anzupassen.

14. Verfahren nach Anspruch 1, wobei die Zellflusseigenschaft eine Zellflussphase ist, und das Steuern (S120) der bestimmten Vorrichtung oder der vorgeschalteten Vorrichtung der bestimmten Vorrichtung, um die Anzahl von Codeblöcken eines vorbestimmten Typs in dem gesendeten Zellfluss auf der Basis der Abweichungsinformationen anzupassen, umfasst:
Auswählen einer Zellflussgeschwindigkeit als die Zellflusseigenschaft, Detektieren von Geschwindigkeitsabweichungsinformationen eines tatsächlichen Geschwindigkeitswerts und eines gewünschten Geschwindigkeitswerts der Zellflussgeschwindigkeit in der bestimmten Vorrichtung, und Steuern der bestimmten Vorrichtung oder der vorgeschalteten Vorrichtung der bestimmten Vorrichtung, um gemäß den Geschwindigkeitsabweichungsinformationen die Anzahl von Codeblöcken eines vorbestimmten Typs des gesendeten Zellflusses innerhalb des vorbestimmten Zeitraums oder der vorbestimmten Datenstromlänge anzupassen;
Auswählen einer Zellflussphase als die Zellflusseigenschaft, wenn der tatsächliche Geschwindigkeitswert und der gewünschte Geschwindigkeitswert der Zellflussgeschwindigkeit in der bestimmten Vorrichtung konsistent sind;
Detektieren von Phasenpositions-Abweichungsinformationen der tatsächlichen Phasenposition und der gewünschten Phasenposition der Zellflussphase in der bestimmten Vorrichtung; und
Steuern der bestimmten Vorrichtung oder der vorgeschalteten Vorrichtung der bestimmten Vorrichtung, um gemäß den Phasenpositions-Abweichungsinformationen die Anzahl von Codeblöcken eines vorbestimmten Typs des gesendeten Zellflusses anzupassen.

15. Vorrichtung zur Anpassung eines Zellflusseigenschaftswerts, die auf eine Zelle mit einer festen Länge angewandt wird, umfassend
ein Eigenschaftsabweichungsinformations-Detektionsmodul (210), das konfiguriert ist, um Abweichungsinformationen eines tatsächlichen Eigenschaftswerts und eines gewünschten Eigenschaftswerts einer Zellflusseigenschaft einer bestimmten Vorrichtung zu detektieren; und
ein Steuermodul (230) zur Anpassung eines vorbestimmten Codeblocks, das konfiguriert ist, um die bestimmte Vorrichtung oder eine vorgeschaltete Vorrichtung der bestimmten Vorrichtung zu steuern, um die Anzahl von Codeblöcken eines vorbestimmten Typs in dem gesendeten Zellfluss auf der Basis der Abweichungsinformationen anzupassen, um den tatsächlichen Eigenschaftswert der Zellflusseigenschaft der bestimmten Vorrichtung anzupassen,
wobei das Eigenschaftsabweichungsinformations-Detektionsmodul (210) ferner konfiguriert ist, um: als Reaktion auf das Bestimmen, dass die Zellflusseigenschaft eine Zellflussgeschwindigkeit ist, Geschwindigkeitsabweichungsinformationen eines tatsächlichen Geschwindigkeitswerts und eines gewünschten Geschwindigkeitswerts einer Zellflussgeschwindigkeit der bestimmten Vorrichtung zu detektieren; und als Reaktion auf das Bestimmen, dass die Zellflusseigenschaft eine Zellflussphase ist, Phasenpositions-Abweichungsinformationen der tatsächlichen Phasenposition und der gewünschten Phasenposition der Zellflussphase der bestimmten Vorrichtung zu detektieren.

## Revendications

1. Procédé d'ajustement de valeur de caractéristique de flux de cellule, appliqué à une cellule ayant une longueur fixe, comprenant les étapes consistant à :
détecter (S110) des informations de déviation d'une valeur de caractéristique réelle et d'une valeur de caractéristique souhaitée d'une caractéristique de flux de cellule d'un dispositif désigné ; et
contrôler (S120) l'un du dispositif désigné et d'un dispositif en amont du dispositif désigné pour ajuster le nombre de blocs de code de type prédéterminé dans le flux de cellule envoyé sur la base des informations de déviation pour ajuster la valeur de caractéristique réelle des caractéristiques de flux de cellule du dispositif désigné,
dans lequel la détection (S110) des informations de déviation de la valeur de caractéristique réelle et de la valeur de caractéristique souhaitée de la caractéristique de flux de cellule du dispositif désigné comprend les étapes consistant à :
en réponse à déterminer que la caractéristique de flux de cellule est une vitesse de flux de cellule, détecter des informations de déviation de vitesse d'une valeur de vitesse réelle et d'une valeur de vitesse souhaitée d'une vitesse de flux de cellule du dispositif désigné ; et
en réponse à déterminer que la caractéristique de flux de cellule est une phase de flux de cellule, détecter des informations de déviation de position de phase de la position de phase réelle et de la position de phase souhaitée de la phase de flux de cellule du dispositif désigné.

2. Procédé selon la revendication 1, dans lequel la valeur de vitesse réelle est une valeur de vitesse déterminée sur la base du nombre de cellules dans une direction de réception détectées par le dispositif désigné par unité de temps, et la valeur de vitesse souhaitée est une valeur de vitesse de transmission effective du flux de cellule du dispositif désigné ; et
la position de phase réelle est une position de phase du flux de cellule reçu par le dispositif désigné, et la position de phase souhaitée est une position de phase du flux de cellule envoyé du dispositif désigné.

3. Procédé selon la revendication 2, dans lequel en réponse à déterminer que la caractéristique de flux de cellule est la vitesse de flux de cellule, les informations de déviation de vitesse incluent une valeur de déviation de vitesse et une direction de déviation de vitesse, et la détection des informations de déviation de vitesse de la valeur de vitesse réelle et de la valeur de vitesse souhaitée de la vitesse de flux de cellule du dispositif désigné comprend les étapes consistant à :
déterminer, sur la base d'informations de changement de valeur détectée d'un premier paramètre de détection prédéterminé dans le dispositif désigné, la direction de déviation de vitesse de la valeur de vitesse réelle et de la valeur de vitesse souhaitée.

4. Procédé selon la revendication 3, dans lequel déterminer, sur la base des informations de changement de valeur détectée du premier paramètre de détection prédéterminé dans le dispositif désigné, la direction de déviation de vitesse de la valeur de vitesse réelle et de la valeur de vitesse souhaitée comprend les étapes consistant à :
détecter une vitesse d'un flux de cellule reçu et une vitesse du flux de cellule envoyé du dispositif désigné ;
déterminer que la direction de déviation de vitesse est une direction supérieure à la vitesse souhaitée si la vitesse du flux de cellule reçu est supérieure à la vitesse du flux de cellule envoyé ; et
déterminer que la direction de déviation de vitesse est une direction inférieure à la vitesse souhaitée si la vitesse du flux de cellule reçu est inférieure à la vitesse du flux de cellule envoyé.

5. Procédé selon la revendication 3, dans lequel déterminer, sur la base des informations de changement de valeur détectée du premier paramètre de détection prédéterminé dans le dispositif désigné, la direction de déviation de vitesse de la valeur de vitesse réelle et de la valeur de vitesse souhaitée comprend les étapes consistant à :
détecter, dans une première durée prédéterminée, une valeur de numéro de séquence transportée par un flux de cellule reçu et une valeur de numéro de séquence transportée par le flux de cellule envoyé du dispositif désigné à chaque moment spécifié ;
déterminer que la direction de déviation de vitesse est une direction supérieure à la vitesse souhaitée si une valeur de différence de numéro de séquence entre la valeur de numéro de séquence transportée par le flux de cellule reçu et la valeur de numéro de séquence transportée par le flux de cellule envoyé augmente dans la première durée prédéterminée ; et
déterminer que la direction de déviation de vitesse est une direction inférieure à la vitesse souhaitée si la valeur de différence de numéro de séquence diminue dans la première durée prédéterminée.

6. Procédé selon la revendication 3, dans lequel déterminer, sur la base des informations de changement de valeur détectée du premier paramètre de détection prédéterminé dans le dispositif désigné, la direction de déviation de vitesse de la valeur de vitesse réelle et de la valeur de vitesse souhaitée comprend les étapes consistant à :
détecter une capacité de stockage d'un cache de cellule du dispositif désigné à chaque moment spécifié pendant une seconde durée prédéterminée ;
déterminer que la direction de déviation de vitesse est une direction supérieure à la vitesse souhaitée si la capacité de stockage augmente pendant la seconde durée prédéterminée ;
déterminer que la direction de déviation de vitesse est une direction inférieure à la vitesse souhaitée si la capacité de stockage diminue pendant la seconde durée prédéterminée.

7. Procédé selon la revendication 2, dans lequel en réponse à déterminer que la caractéristique de flux de cellule est la vitesse de flux de cellule, les informations de déviation de vitesse incluent une valeur de déviation de vitesse et une direction de déviation de vitesse, et détecter les informations de déviation de vitesse de la valeur de vitesse réelle et de la valeur de vitesse souhaitée de la vitesse de flux de cellule du dispositif désigné comprend les étapes consistant à :
déterminer la valeur de déviation de vitesse du flux de cellule en utilisant une valeur détectée d'un premier paramètre de détection prédéterminé dans le dispositif désigné ; et
déterminer, sur la base d'informations de changement de valeur détectée du premier paramètre de détection prédéterminé dans le dispositif désigné, la direction de déviation de vitesse de la valeur de vitesse réelle et de la valeur de vitesse souhaitée, et
dans lequel déterminer la valeur de déviation de vitesse du flux de cellule en utilisant la valeur détectée du premier paramètre de détection prédéterminé dans le dispositif désigné comprend les étapes consistant à :
détecter une vitesse d'un flux de cellule reçu et une vitesse du flux de cellule envoyé dans le dispositif désigné ;
ou déterminer, dans une durée prédéterminée, la vitesse du flux de cellule reçu et la vitesse du flux de cellule envoyé dans le dispositif désigné sur la base d'une valeur de numéro de séquence détectée transportée par le flux de cellule reçu et d'une valeur de numéro de séquence détectée transportée par le flux de cellule envoyé du dispositif désigné à chaque moment spécifié ; et
prendre une valeur absolue d'une différence de vitesse entre la vitesse du flux de cellule reçu et la vitesse du flux de cellule envoyé comme valeur de déviation de vitesse de la vitesse de flux de cellule.

8. Procédé selon la revendication 2, dans lequel en réponse à déterminer que la caractéristique de flux de cellule est la phase de flux de cellule, les informations de déviation de position de phase incluent une direction de déviation de position de phase et une valeur de déviation de position de phase, et détecter les informations de déviation de position de phase de la position de phase réelle et de la position de phase souhaitée de la phase de flux de cellule du dispositif désigné comprend les étapes consistant à :
déterminer la direction de déviation de position de phase de la position de phase réelle et de la position de phase souhaitée sur la base d'une relation relative entre une valeur de paramètre détectée dans une direction de réception et une valeur de paramètre détectée dans une direction de transmission d'un second paramètre de détection prédéterminé du dispositif désigné.

9. Procédé selon la revendication 8, dans lequel déterminer la direction de déviation de position de phase de la position de phase réelle et de la position de phase souhaitée sur la base de la relation relative entre la valeur de paramètre détectée dans la direction de réception et la valeur de paramètre détectée dans la direction de transmission du second paramètre de détection prédéterminé du dispositif désigné comprend les étapes consistant à :
déterminer que la direction de déviation de position de phase est une direction supérieure à la position de phase souhaitée si la position de phase du flux de cellule reçu dans le dispositif désigné est détectée comme étant en avant de la position de phase du flux de cellule envoyé ; et
déterminer que la direction de déviation de position de phase est une direction inférieure à la position de phase souhaitée si la position de phase du flux de cellule reçu du dispositif désigné est détectée comme étant en retard par rapport à la position de phase du flux de cellule envoyé.

10. Procédé selon la revendication 2, dans lequel les informations de déviation de position de phase incluent une direction de déviation de position de phase et une valeur de déviation de position de phase ; et détecter les informations de déviation de position de phase de la position de phase réelle et de la position de phase souhaitée de la phase de flux de cellule du dispositif désigné comprend les étapes consistant à :
calculer la valeur de déviation de position de phase entre la position de phase réelle et la position de phase souhaitée sur la base de la différence entre une valeur de paramètre détectée dans la direction de réception et une valeur de paramètre détectée dans la direction de transmission d'un second paramètre de détection prédéterminé du dispositif désigné ; et
déterminer la direction de déviation de position de phase de la position de phase réelle et de la position de phase souhaitée sur la base d'une relation relative entre la valeur de paramètre détectée dans la direction de réception et la valeur de paramètre détectée dans la direction de transmission du second paramètre de détection prédéterminé du dispositif désigné,
dans lequel calculer la valeur de déviation de position de phase entre la position de phase réelle et la position de phase souhaitée sur la base de la différence entre la valeur de paramètre détectée dans la direction de réception et la valeur de paramètre détectée dans la direction de transmission du second paramètre de détection prédéterminé du dispositif désigné comprend les étapes consistant à :
détecter une position de phase du flux de cellule reçu et une position de phase du flux de cellule envoyé dans le dispositif désigné ;
ou déterminer la position de phase du flux de cellule reçu et la position de phase du flux de cellule envoyé dans le dispositif désigné sur la base d'une valeur de numéro de séquence détectée transportée par le flux de cellule reçu et d'une valeur de numéro de séquence détectée transportée par le flux de cellule envoyé dans le dispositif désigné ;
prendre une valeur absolue d'une différence de position entre la position de phase du flux de cellule reçu et la position de phase du flux de cellule envoyé comme valeur de déviation de position de phase entre la position de phase réelle et la position de phase souhaitée.

11. Procédé selon la revendication 1, dans lequel les informations de déviation incluent une valeur de déviation de vitesse et une direction de déviation de vitesse ; et contrôler (S120) l'un du dispositif désigné et du dispositif en amont du dispositif désigné pour ajuster le nombre de blocs de code de type prédéterminé dans le flux de cellule envoyé sur la base des informations de déviation comprend les étapes consistant à :
déterminer une première quantité d'ajustement et une première direction d'ajustement du bloc de code de type prédéterminé selon la valeur de déviation de vitesse et la direction de déviation de vitesse ;
contrôler le dispositif en amont du dispositif désigné pour ajuster, selon la première direction d'ajustement et la première quantité d'ajustement, le nombre de blocs de code de type prédéterminé du flux de cellule dans la période prédéterminée ou la longueur de flux de données prédéterminée ;
ou, contrôler le dispositif désigné pour ajuster, selon une direction opposée de la première direction d'ajustement et de la première quantité d'ajustement, le nombre de blocs de code de type prédéterminé du flux de cellule dans la période prédéterminée ou la longueur de flux de données prédéterminée.

12. Procédé selon la revendication 1, dans lequel les informations de déviation incluent une direction de déviation de vitesse ; et contrôler (S120) l'un du dispositif désigné et du dispositif en amont du dispositif désigné pour ajuster le nombre de blocs de code de type prédéterminé dans le flux de cellule envoyé sur la base des informations de déviation comprend les étapes consistant à :
déterminer une seconde direction d'ajustement du bloc de code de type prédéterminé selon la direction de déviation de vitesse ;
contrôler le dispositif en amont du dispositif désigné pour ajuster, selon la seconde direction d'ajustement, le nombre de blocs de code de type prédéterminé du flux de cellule envoyé dans la période prédéterminée ou la longueur de flux de données prédéterminée en utilisant un nombre spécifié de blocs de type prédéterminé ;
ou, contrôler le dispositif désigné pour ajuster, selon une direction opposée de la seconde direction d'ajustement, le nombre de blocs de code de type prédéterminé du flux de cellule dans la période prédéterminée ou la longueur de flux de données prédéterminée en utilisant un nombre spécifié de blocs de code de type prédéterminé.

13. Procédé selon la revendication 1, dans lequel la caractéristique de flux de cellule est une vitesse de flux de cellule, et après avoir ajusté le nombre de blocs de code de type prédéterminé du flux de cellule dans la période prédéterminée ou la longueur de flux de données prédéterminée, le procédé comprend en outre les étapes consistant à :
sélectionner une phase de flux de cellule en tant que caractéristique de flux de cellule lorsqu'une valeur de vitesse réelle et une valeur de vitesse souhaitée de la vitesse de flux de cellule du dispositif désigné sont détectées comme étant cohérentes ;
détecter des informations de déviation de position de phase d'une position de phase réelle et d'une position de phase souhaitée de la phase de flux de cellule dans le dispositif désigné ;
contrôler l'un du dispositif désigné ou du dispositif en amont du dispositif désigné pour ajuster, sur la base des informations de déviation de position de phase, le nombre de blocs de code de type prédéterminé dans le flux de cellule envoyé pour ajuster la position de phase réelle de la caractéristique de flux de cellule dans le dispositif désigné.

14. Procédé selon la revendication 1, dans lequel la caractéristique de flux de cellule est une phase de flux de cellule, et contrôler (S120) l'un du dispositif désigné et du dispositif en amont du dispositif désigné pour ajuster le nombre de blocs de code de type prédéterminé dans le flux de cellule envoyé sur la base des informations de déviation comprend les étapes consistant à :
sélectionner une vitesse de flux de cellule en tant que caractéristique de flux de cellule, détecter des informations de déviation de vitesse d'une valeur de vitesse réelle et d'une valeur de vitesse souhaitée de la vitesse de flux de cellule dans le dispositif désigné, et contrôler l'un du dispositif désigné et du dispositif en amont du dispositif désigné pour ajuster, selon les informations de déviation de vitesse, le nombre de blocs de code de type prédéterminé du flux de cellule envoyé dans la période prédéterminée ou la longueur de flux de données prédéterminée ;
sélectionner une phase de flux de cellule en tant que caractéristique de flux de cellule lorsque la valeur de vitesse réelle et la valeur de vitesse souhaitée de la vitesse de flux de cellule dans le dispositif désigné sont cohérentes ;
détecter des informations de déviation de position de phase de la position de phase réelle et de la position de phase souhaitée de la phase de flux de cellule dans le dispositif désigné ; et
contrôler l'un du dispositif désigné et du dispositif en amont du dispositif désigné pour ajuster, selon les informations de déviation de position de phase, le nombre de blocs de code de type prédéterminé du flux de cellule envoyé.

15. Dispositif d'ajustement de valeur de caractéristique de flux de cellule, appliqué à une cellule ayant une longueur fixe, comprenant
un module de détection d'informations de déviation de caractéristique (210) configuré pour détecter des informations de déviation d'une valeur de caractéristique réelle et d'une valeur de caractéristique souhaitée d'une caractéristique de flux de cellule d'un dispositif désigné ; et
un module de contrôle d'ajustement de bloc de code prédéterminé (230) configuré pour contrôler l'un du dispositif désigné et d'un dispositif en amont du dispositif désigné pour ajuster le nombre de blocs de code de type prédéterminé dans le flux de cellule envoyé sur la base des informations de déviation pour ajuster la valeur de caractéristique réelle de la caractéristique de flux de cellule du dispositif désigné,
dans lequel le module de détection d'informations de déviation de caractéristique (210) est en outre configuré pour : en réponse à déterminer que la caractéristique de flux de cellule est une vitesse de flux de cellule, détecter des informations de déviation de vitesse d'une valeur de vitesse réelle et d'une valeur de vitesse souhaitée d'une vitesse de flux de cellule du dispositif désigné ; et en réponse à déterminer que la caractéristique de flux de cellule est une phase de flux de cellule, détecter des informations de déviation de position de phase de la position de phase réelle et de la position de phase souhaitée de la phase de flux de cellule du dispositif désigné.
